# FASCICULE DE BREVET EUROPEEN

(11) **EP 0 454 602 B1**
(45) Date de publication et mention de la délivrance du brevet: **25.10.1995**
(21) Numéro de dépôt: 91440033.8
(22) Date de dépôt: 25.04.1991
(51) Int. Cl.: A01B 73/04, A01D 78/10

(54) **Machine de fenaison avec plusieurs rotors**
Heuwerbungsmachine mit mehreren Kreiseln
Haymaking machine having several rotors

(30) Priorité: 27.04.1990 FR 9005610
(43) Date de publication de la demande: 30.10.1991
(73) Titulaire: KUHN S.A., F-67700 Saverne (FR)
(72) Inventeur: Quirin, Michel, F-67310 Wasselonne (FR)
(74) Mandataire: Andres, Jean-Claude

(56) Documents cités:
- EP-A- 0 203 023
- EP-A- 0 300 937
- EP-A- 0 341 414
- DE-A- 3 827 047
- DE-U- 8 716 698

## Description

La présente invention se rapporte à une machine de fenaison comportant un châssis pouvant être accouplé à un tracteur, lequel châssis se compose d'un tronçon central et de plusieurs tronçons latéraux qui sont articulés entre eux au moyen d'axes dirigés dans la direction de déplacement et qui portent des rotors entraînés en rotation durant le travail au moyen d'organes de transmission qui sont logés dans les tronçons du châssis, lesdits tronçons latéraux pouvant être transposés au moyen de vérins hydrauliques dans une position de travail dans laquelle ils sont sensiblement alignés et une position de transport dans laquelle ils sont repliés autour de leurs axes d'articulation.

Le brevet FR-2 582 186 se rapporte à une machine dont le châssis se compose d'un tronçon central et d'un tronçon latéral de chaque côté de celui-ci. Cette machine ne comporte que quatre rotors. Une telle machine convient parfaitement aux petites et moyennes exploitations. Sa largeur de travail n'est cependant pas assez importante pour les grandes exploitations ou bien les entrepreneurs qui nécessitent des machines plus performantes.

La demande de brevet EP-300 937 se rapporte à des machines de fenaison ayant des châssis se composant d'un tronçon central et de deux ou de quatre tronçons latéraux articulés entre eux. Ces machines comportent alors respectivement quatre ou six rotors. Pour le transport tous les tronçons latéraux sont repliés vers le haut et les rotors des deux tronçons latéraux qui sont articulés au tronçon central sont basculés autour d'axes supplémentaires de sorte qu'ils soient orientés vers le haut. Ces axes d'articulation supplémentaires compliquent à la fois la réalisation et l'utilisation de ces machines. Par ailleurs, les largeurs de travail de ces machines ne sont pas non plus suffisamment importantes.

Les machines décrites dans le modèle d'utilité DE-87 16 698 ne comportent que six rotors. Leurs châssis respectifs se composent d'un tronçon central et de deux tronçons latéraux de chaque côté dudit tronçon central. Pour le transport, ces tronçons latéraux peuvent être repliés essentiellement au moyen de vérins hydrauliques et de leviers. Ces derniers sont reliés aux tronçons latéraux extérieurs qu'ils font basculer autour de leurs axes d'articulation respectifs lors de la transposition de la position de travail dans la position de transport et inversement. Ces leviers immobilisent pratiquement lesdits tronçons latéraux dans chacune de ces positions, ce qui empêche leurs rotors de suivre correctement les dénivellations du sol durant le travail.

La demande de brevet DE-3 827 047 qui décrit une machine selon le préambule de la revendication 1 se rapporte à une machine comportant au total huit rotors. Sur cette machine les deux derniers rotors de chaque extrémité du châssis se situent sur un même tronçon et sont fixes l'un par rapport à l'autre. Ces rotors ne peuvent donc pas suivre correctement les dénivellations du sol. En sus, dans la position de transport tous les tronçons latéraux sont dirigés vers le haut. La hauteur de la machine est alors extrêmement importante, ce qui est gênant pour passer, par exemple, sous un porche, un pont ou bien des arbres. De plus, dans cette position, la machine nécessite un abri très haut pour la mettre à couvert pendant la période de l'année où elle n'est pas utilisée et sa stabilité n'est pas absolument sûre.

La présente invention a pour but de proposer une machine avec une grande largeur de travail, de construction simple, pouvant parfaitement s'adapter aux dénivellations du sol durant le travail et dont l'encombrement peut être considérablement et facilement réduit pour le transport.

A cet effet, une importante caractéristique de l'invention consiste en ce que sur chaque côté du tronçon central du châssis sont disposés trois tronçons latéraux qui sont articulés entre eux au moyen d'axes dirigés dans la direction de déplacement et dont chacun est constitué par un tube et un boîtier muni d'un rotor, que les articulations entre les rotors sont telles qu'elles permettent que dans la position de transport les premiers et seconds tronçons latéraux soient dirigés vers le haut et les troisièmes tronçons latéraux soient dirigés vers le bas à partir de leurs ces d'articulation respectifs et que le vérin hydraulique s'étend directement du tronçon central jusqu'à chaque troisième tronçon latéral, l'extrémité de chaque vérin hydraulique qui est reliée au troisième tronçon latéral comportant un tourillon qui est logé dans un orifice oblong prévu dans une plaque qui est solidaire dudit troisième tronçon.

Cette machine peut ainsi comporter huit rotors, ce qui lui permet d'avoir une très grande largeur de travail. La constitution des tronçons latéraux leur assure une bonne stabilité durant le travail. Ils peuvent aussi suivre individuellement les dénivellations du sol. Dans la position de transport, la hauteur de la machine est réduite. Elle peut ainsi être déplacée sans difficulté et sa stabilité est très bonne lorsqu'elle est déposée. Cette position convient aussi pour mettre la machine sous un abri pendant l'hiver.

Les deux vérins hydrauliques permettent de replier tous les tronçons latéraux jusque dans la position de transport. Ils permettent également de déployer totalement les tronçons latéraux pour revenir dans la position de travail. Dans cette position, les tronçons latéraux peuvent se déplacer par rapport aux vérins. Leurs rotors ont ainsi la possibilité de bien suivre les dénivellations du sol.

Selon une autre caractéristique de l'invention, la liaison entre chaque vérin hydraulique et le troisième tronçon latéral correspondant comprend des moyens agencés de manière à déplacer le tourillon du vérin hydraulique vers le haut, par rapport à l'axe d'articulation dudit tronçon latéral, dans son orifice oblong lorsque ledit vérin hydraulique tire ou pousse sur le troisième tronçon latéral dans la phase de démarrage pour le déplacer dans la position de transport ou dans la position de travail.

Lesdits moyens assurent un important bras de levier auxdits vérins à la fois lorsqu'ils tirent ou poussent sur les troisièmes tronçons latéraux et facilitent ainsi le repliage et le dépliage de ces derniers. Ces moyens font en sorte que durant chacune de ces opérations les vérins hydrauliques soient nettement plus éloignés du sol que les différents axes d'articulation entre les tronçons. De ce fait, il suffit d'une simple traction ou poussée des vérins pour faire pivoter les tronçons latéraux autour desdits axes d'articulation.

Une autre caractéristique consiste en ce que chaque vérin hydraulique se situe devant les tronçons latéraux du châssis. Les troisièmes tronçons latéraux peuvent ainsi être repliés de près de 180° autour de leurs axes d'articulation sans qu'ils entrent en collision avec les vérins.

Selon une autre caractéristique de l'invention, le châssis de la machine comporte des dispositifs d'arrêt télescopiques qui s'étendent entre le tronçon central et les seconds tronçons latéraux. Lorsque la machine est soulevée du sol avec les tronçons latéraux déployés, ces dispositifs d'arrêt portent pratiquement lesdits tronçons latéraux. Ils évitent ainsi une trop forte sollicitation des articulations entre les seconds et les premiers tronçons latéraux ainsi que de celles entre ces derniers et le tronçon central. Un verrou manoeuvrable à distance peut avantageusement être associé à chacun de ces dispositifs. Chaque verrou bloque le dispositif correspondant lorsque les tronçons latéraux sont dans la position de transport. Lesdits tronçons sont ainsi immobilisés d'une manière positive durant les déplacements.

Une autre caractéristique de l'invention consiste en ce que la machine comporte des tirants reliant les axes d'articulation entre les premiers et les seconds tronçons latéraux à des traverses fixes solidaires du châssis. Ces tirants peuvent être articulés sur lesdites traverses en des endroits situés dans le prolongement des axes d'articulation entre les premiers tronçons latéraux et le tronçon central. Ces traverses fixes et les tirants contribuent à maintenir les différents tronçons du châssis alignés durant le travail. Ils soulagent aussi les articulations entre les tronçons du châssis lorsque les rotors rencontrent des obstacles.

D'autres caractéristiques et avantages de l'invention ressortiront des autres revendications et de la description ci-après de plusieurs exemples de réalisation non limitatifs de l'invention, avec référence aux dessins annexés dans lesquels :
- La figure 1 représente une vue de dessus partielle d'un premier exemple de réalisation d'une machine selon l'invention, dans la position de travail,
- La figure 2 représente une vue arrière de cette machine dans la position de travail,
- La figure 3 représente une vue arrière de la même machine dans la position de transport,
- Les figures 4 et 5 représentent des vues arrière de la même machine, à deux stades différents, lors de la transposition de la position de travail dans la position de transport ou inversement,
- La figure 6 représente une vue de devant partielle d'un deuxième exemple de réalisation d'une machine selon l'invention, dans la position de travail,
- La figure 7 représente une vue de détail de la machine selon la figure 6, au début de la première phase lors de la mise en position de transport,
- La figure 8 représente une vue similaire à celle de la figure 7, au début de la deuxième phase lors de la mise en position de transport,
- La figure 9 représente une vue de détail de la machine selon la figure 6, au début de la phase de déploiement des troisièmes tronçons latéraux lors de la mise en position de travail,
- La figure 10 représente une vue de dessus partielle d'un troisième exemple de réalisation d'une machine selon l'invention, dans la position de travail,
- La figure 11 représente une vue de devant partielle de la machine selon la figure 10,
- La figure 12 représente une vue de détail de la machine selon les figures 10 et 11, au début de la première phase lors de la mise en position de transport,
- La figure 13 représente une vue similaire à celle de la figure 12, au début de la deuxième phase lors de la mise en position de transport,
- La figure 14 représente une vue de devant partielle d'un quatrième exemple de réalisation d'une machine selon l'invention, dans la position de travail,
- La figure 15, représente une vue de détail de la machine de la figure 14, au début de la première phase lors de la mise en position de transport,
- La figure 16, représente une vue de détail de la machine selon la figure 14, lors du pivotement des troisièmes tronçons latéraux,
- La figure 17 représente aussi une vue de détail de la machine selon la figure 14, au début de la deuxième phase lors de la mise en position de transport,
- La figure 18 représente la machine selon la figure 14 en position de transport,
- La figure 19 représente une vue de devant partielle d'un cinquième exemple de réalisation d'une machine selon l'invention, dans la position de travail,
- La figure 20 représente une vue de détail de la machine selon la figure 19, au début de la première phase lors de la mise en position de transport,
- La figure 21 représente une vue de détail de la machine selon la figure 19, lors du pivotement des troisièmes tronçons latéraux,
- La figure 22 représente une autre vue de détail de la machine selon la figure 19,
- La figure 23 représente la machine selon la figure 19 en position de transport.

Les figures mentionnées ci-dessus ne représentent souvent, pour conserver plus de clarté, qu'une moitié de la machine. La moitié non représentée est symétrique et présente donc les mêmes caractéristiques que la moitié représentée.

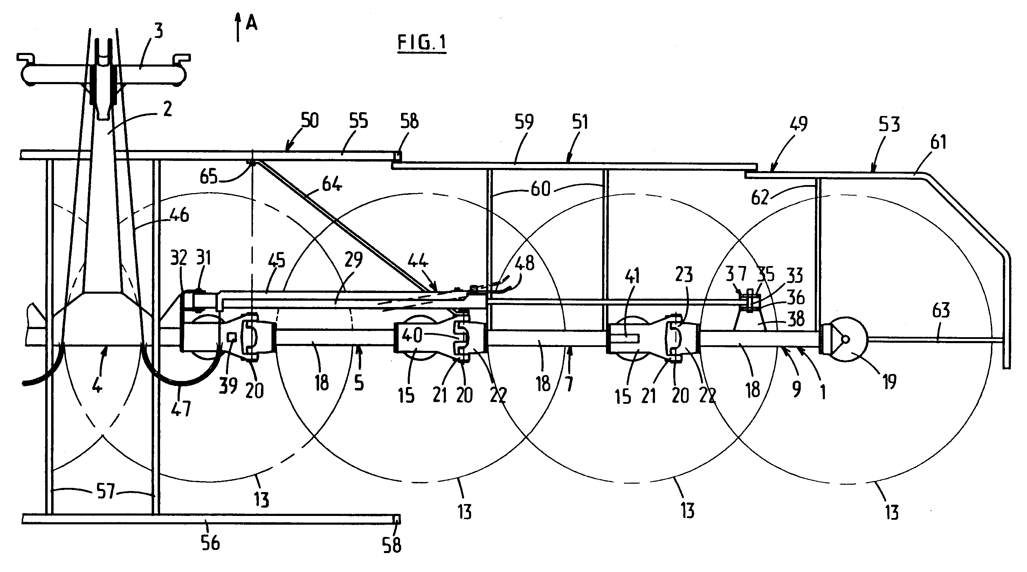

Tel que cela ressort des figures 1 à 5 la machine du premier exemple de réalisation comporte un châssis (1) pouvant être accouplé à un tracteur d'entraînement non représenté. A cet effet, il possède une poutre (2) portant à son extrémité avant un dispositif d'accouplement (3). Ce châssis (1) se compose par ailleurs d'un tronçon central (4) et de six tronçons latéraux (5 à 10) dont trois (5, 7 et 9) se situent d'un côté dudit tronçon central et trois (6, 8 et 10) de l'autre côté. Selon leur position par rapport au tronçon central (4) ces tronçons latéraux (5 à 10) sont appelés ci-après premiers, seconds et troisièmes tronçons latéraux. Le tronçon central (4) est relié à la poutre (2) au moyen d'équerres (11) et d'une traverse (12). Ce tronçon central (4) comporte deux rotors (13). Il se compose d'un carter (14), de deux boîtiers (15) et de deux tubes (16 et 17) qui relient lesdits boîtiers au carter (14). Chaque tronçon latéral (5 à 10) porte un seul rotor (13) et se compose d'un tube (18) et d'un boîtier (15, 19). Les premiers et seconds tronçons latéraux (5, 6 et 7, 8) sont sensiblement identiques. Les troisièmes tronçons (9, 10) comportent des boîtiers (19) terminaux.

Ces différents tronçons (4 à 10) sont articulés entre eux au moyen d'axes (20) qui sont sensiblement horizontaux et dirigés dans la direction d'avancement (A). Ces axes d'articulation sont réalisés en deux parties alignées l'une sur l'autre. Pour articuler les tronçons (4 à 10) entre eux, chaque boîtier (15) comporte deux oreilles(21). Chaque tube (18) comporte un embout (22) qui est également muni de deux oreilles (23). Ces dernières s'engagent entre les deux oreilles (21) du boîtier (15) voisin. Ces différentes oreilles (21 et 23) possèdent des alésages dans lesquels sont logés les axes d'articulation (20).

Chaque rotor (13) est constitué par un moyeu (24) auquel sont fixés plusieurs bras (25) portant des fourches de travail (26) à leurs extrémités libres. Chacun de ces moyeux (24) est monté de manière à pouvoir tourner sur un axe support fixe (27) qui est sensiblement vertical ou incliné dans la direction d'avancement (A) de la machine. Ces axes (27) sont fixés aux boîtiers (15, 19) des tronçons (4 à 10). Ils portent à leurs extrémités inférieures des roulettes (28) qui roulent sur le sol durant le travail.

Ces rotors (13) peuvent être entraînés en rotation autour de leurs axes supports (27) au moyen d'arbres de transmission qui sont logés dans les tronçons (4 à 10). Dans chaque boîtier (15 et 19) ces arbres de transmission comportent un pignon d'entraînement qui engrène avec une couronne dentée qui est solidaire du moyeu (24) du rotor (13) correspondant. D'autre part, au niveau de chaque articulation (20) entre les tronçons (4 à 10) lesdits arbres de transmission sont reliés entre eux par des dispositifs d'accouplement à doigts qui sont connus en soi. Ces dispositifs d'accouplement permettent des déplacements jusqu'à 180° entre les arbres de transmission.

L'arbre de transmission qui est logé dans le tronçon central (4) traverse le carter (14). A l'intérieur de celui ci, il comporte un pignon d'entraînement qui est en prise avec un autre pignon solidaire d'un arbre qui s'étend hors du carter (14), sur le côté avant de la machine. Cet arbre peut être relié à un arbre de prise de force du tracteur d'entraînement, par l'intermédiaire d'un arbre à cardans.

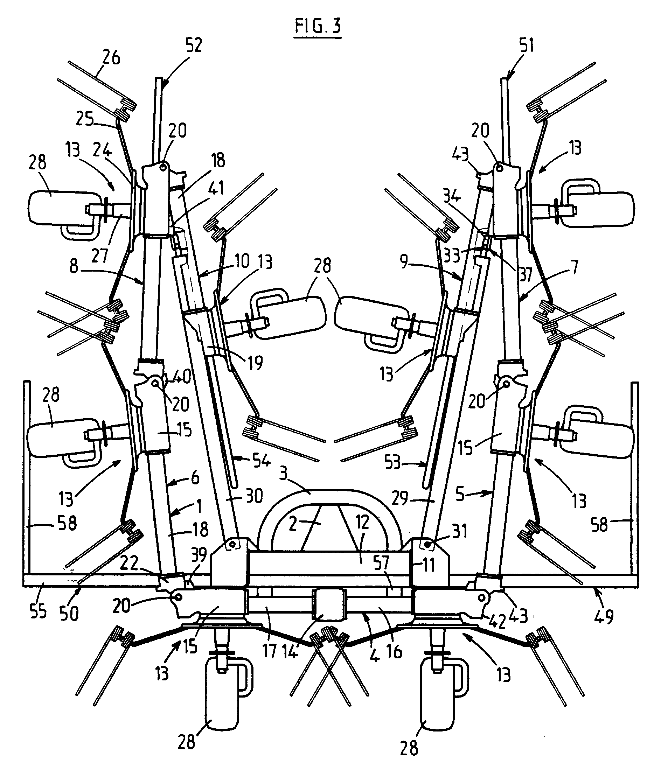

Il ressort également des figures que la machine comporte deux vérins hydrauliques (29 et 30) pour déplacer les tronçons latéraux (5 à 10) dans une position de travail dans laquelle ils sont sensiblement alignés (figure 1) et une position de transport dans laquelle ils sont repliés autour de leurs axes d'articulation (20) (figure 3). Dans cette position, les premiers et seconds tronçons latéraux (5 à 8) sont dirigés vers le haut et les troisièmes tronçons latéraux (9, 10) sont dirigés vers le bas à partir de leurs axes d'articulation (20) respectifs. Ces troisièmes tronçons latéraux (9, 10) se situent alors entre lesdits premiers et seconds tronçons latéraux (5 à 8). Chacun des deux vérins hydrauliques (29, 30) s'étend directement du tronçon central (4) jusqu'à un des troisièmes tronçons latéraux (9 ou 10). Vu de dessus, ces vérins hydrauliques (29, 30) se situent à l'avant des tronçons (4 à 10). Du côté du tronçon central (4) chacun de ces vérins hydrauliques (29, 30) est articulé au moyen d'un axe (31) dans une chape (32) qui est liée à l'une des équerres (11). L'autre extrémité de chaque vérin hydraulique (29, 30) est munie d'un tourillon (33). Celui-ci est engagé dans des orifices oblongs (34) prévus dans deux plaques verticales (35, 36). Celles-ci forment une chape (37) qui est liée au troisième tronçon latéral correspondant (9 ou 10) par l'intermédiaire d'un bras (38). La forme oblongue des orifices (34) permet aux tronçons latéraux (5 à 10) de se déplacer par rapport aux vérins hydrauliques (29, 30) pour suivre les dénivellations du sol. Dans l'exemple de réalisation représenté sur les figures 1 à 5 ces orifices (34) sont sensiblement parallèles aux troisièmes tronçons latéraux (9, 10).

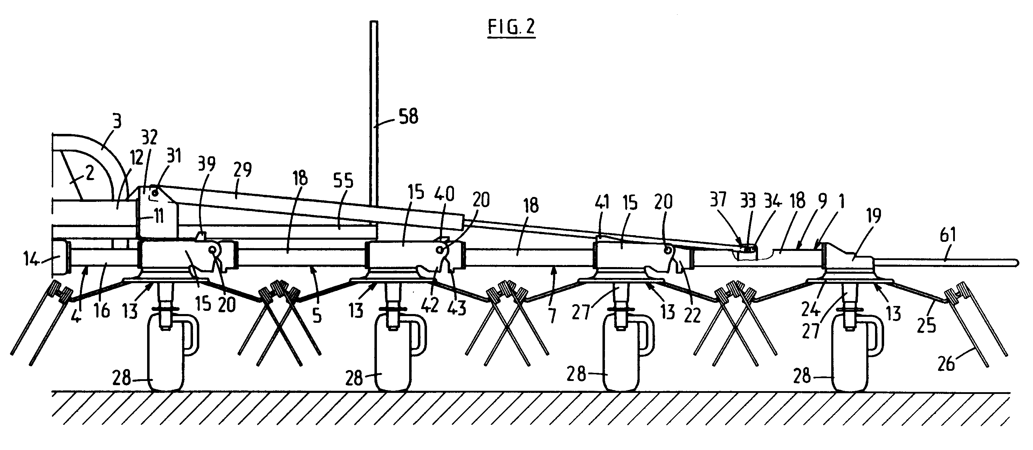

Il ressort de la figure 2 que lorsque les tronçons (4 à 10) du châssis (1) sont dans une position horizontale, les vérins hydrauliques (29, 30) sont plus éloignés du sol que les axes d'articulation (20) entre ces tronçons (4 à 10). Cette disposition est obtenue en plaçant les axes d'articulation (31) et les tourillons (33) des vérins hydrauliques (29, 30) au-dessus d'un plan horizontal passant par les axes d'articulation (20) entre les tronçons (4 à 10). Ainsi, lorsque les vérins hydrauliques (29, 30) se rétractent et tirent sur les tronçons latéraux (5 à 10), ceux-ci ont naturellement tendance à se déplacer vers le haut.

Les boîtiers (15) comportent à leurs parties supérieures des butées (39, 40, 41) pour limiter les angles de pivotement des tronçons latéraux (5 à 10) lorsqu'ils sont repliés dans la position de transport (figure 3). Les oreilles (21 et 23) des boîtiers (15) et des embouts (22) comportent également des butées (42 et 43) qui sont dirigées vers le sol. Celles-ci limitent les déplacements des tronçons latéraux (5 à 10) vers le bas.

Sur le corps de chaque vérin hydraulique (29, 30) est prévu un dispositif de verrouillage (44) permettant de bloquer les tronçons latéraux (5 à 10) dans la position de transport. Chacun de ces dispositifs (44) comporte un levier (45) de forme allongée. Celui-ci est articulé sur le corps du vérin correspondant (29 ou 30) de manière à pouvoir être déplacé dans la position indiquée en traits interrompus sur la figure 1. Un câble de manoeuvre (46) est relié à son extrémité qui est proche du tronçon central (4). Ce câble est partiellement guidé dans une gaine (47) et s'étend vers l'avant afin d'être accessible depuis le siège du tracteur. L'autre extrémité de ce levier (45) est en forme de lame (48). Celle-ci comporte un orifice dans lequel peut s'engager l'extrémité du tourillon (33) lorsque le vérin hydraulique correspondant (29 ou 30) est rétracté en position de transport. Audit levier (45) est en sus accroché un ressort qui le maintient dans la position représentée en traits forts.

On voit aussi sur la figure 1 que la machine est équipée d'un dispositif de protection (49) qui est réalisé en cinq parties (50 à 54) indépendantes entre elles. La partie (50) qui est située au milieu se compose de deux traverses (55 et 56) dont l'une se situe devant et l'autre derrière les rotors (13). La traverse avant (55) est fixée à la poutre (2) et à deux longerons (57). Ceux-ci sont fixés sur le tronçon central (4) et supportent aussi la traverse arrière (56). Chacune de ces traverses (55, 56) comporte à ses extrémités des montants (58) qui sont dirigés vers le haut. Ces montants (58) se situent au niveau des roulettes (28) des rotors (13) faisant partie des premiers tronçons latéraux (5, 6), lorsqu'elles sont relevées dans la position de transport. Ils évitent ainsi que quelqu'un entre en collision avec les fourches (26) desdits rotors (13) durant le transport. Chaque partie intermédiaire (51, 52) du dispositif de protection (49) comporte une barre (59) qui s'étend pratiquement dans le prolongement de la traverse avant (55). Les barres (59) sont reliées aux seconds tronçons latéraux (7 et 8) au moyen de longerons (60). Chaque partie extérieure (53, 54) comporte une barre (61) qui s'étend pratiquement dans le prolongement de la barre (59) voisine et entoure partiellement le rotor (13) du troisième tronçon latéral (9, 10) correspondant. Ces barres (61) sont reliées aux tronçons (9, 10) avec des longerons (62 et 63).

Des tirants (64) sont par ailleurs prévus pour relier les tronçons latéraux (5 à 10) à la traverse avant (55). Du côté des tronçons latéraux ils sont liés aux axes d'articulation (20) entre les premiers et les seconds tronçons (5, 6 et 7, 8). Du côté de la traverse (55) ils sont articulés sur des pivots (65) qui s'étendent dans le prolongement des axes d'articulation (20) entre le tronçon central (4) et les premiers tronçons latéraux (5, 6).

Selon une variante non représentée ces tirants (64) sont constitués par des organes flexibles tels que des câbles ou des chaînes qui s'étendent de la traverse avant (55) jusqu'aux boîtiers (15) des premiers tronçons latéraux (5, 6).

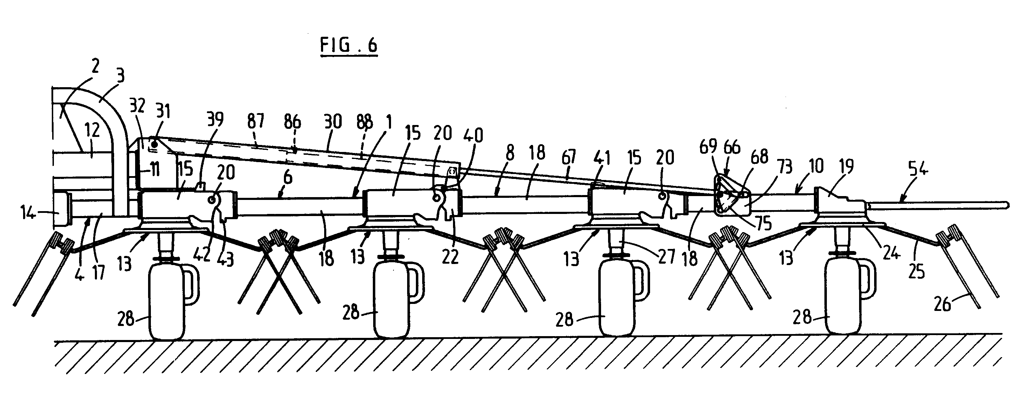

Dans l'exemple de réalisation des figures 6 à 9, le châssis (1) et les rotors (13) de la machine sont comparables à ceux de l'exemple précédent. De ce fait ils ne seront plus décrits en détail. Les vérins hydrauliques (29 et 30) servant au relevage des tronçons latéraux (5 à 10) s'étendent également du tronçon central (4) jusqu'aux troisièmes tronçons latéraux (9, 10). Ils comportent des moyens (66) leur assurant un important bras de levier pour déplacer les troisièmes tronçons latéraux (9 et 10). La tige (67) de chacun de ces vérins hydrauliques (29, 30) est munie d'un tourillon (68) qui est guidé dans des orifices (69) à trois branches (70, 71, 72) en forme de Y. Ces orifices sont prévus dans deux plaques parallèles (73) qui sont reliées aux troisièmes tronçons latéraux (9, 10) et forment des chapes (74). La branche (70) de chaque orifice (69) est sensiblement parallèle au tube (18) du troisième tronçon latéral (9, 10) correspondant. En position de travail les deux autres branches (71 et 72) de chaque orifice (69) sont dirigées vers le milieu de la machine, l'une obliquement vers le haut et l'autre obliquement vers le bas. L'une des plaques (73) comporte en sus un guide mobile (75). Celui-ci peut obturer l'entrée de l'une ou de l'autre des deux branches obliques (71, 72) dans le but de diriger le tourillon (68) dans la branche (71 ou 72) appropriée afin d'augmenter le bras de levier lorsque le vérin hydraulique correspondant (29 ou 30) agit sur le troisième tronçon latéral (9 ou 10). Ledit guide (75) a une forme triangulaire. Il est articulé sur un pivot (76) et peut tourner autour de ce dernier sous l'effet de son propre poids. Chaque plaque (73) qui porte un guide (75) comporte en sus deux butées (77, 78). Celles-ci arrêtent ledit guide dans les positions dans lesquelles il empêche l'accès à l'une ou l'autre des branches (71, 72).

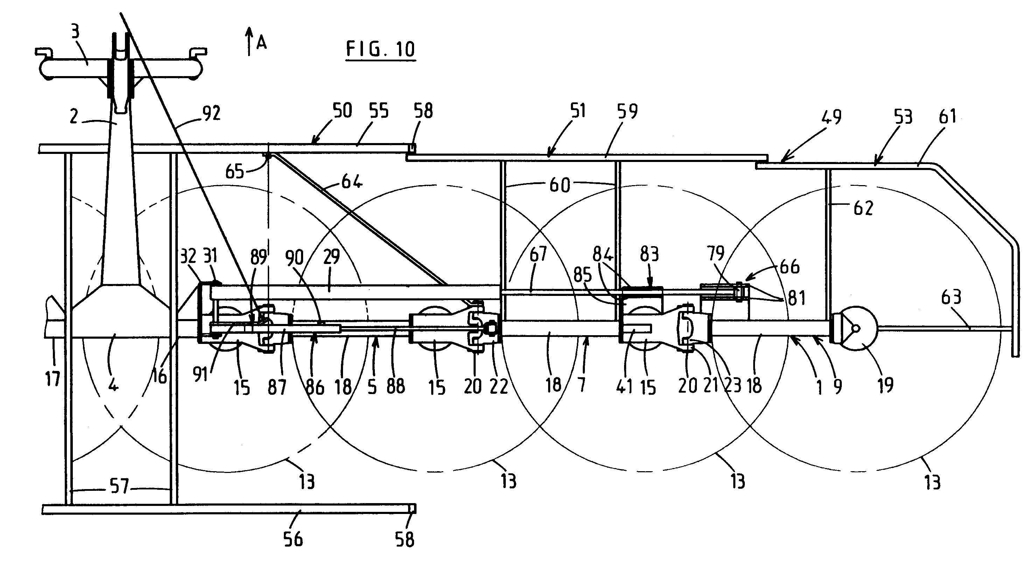

La machine selon l'exemple de réalisation des figures 10 à 13 comporte également un châssis (1) et des rotors (13) comparables à ceux du premier exemple de réalisation déjà décrit. Dans ce cas, les vérins hydrauliques (29, 30) comportent des moyens (66) constitués par des tourillons (79) qui sont guidés dans des orifices (80) de forme allongée. Dans la position de travail les orifices (80) sont dirigés obliquement du bas vers le haut en direction du milieu de la machine. Ils forment ainsi des angles d'environ 45° avec l'horizontale. Ils sont prévus dans deux plaques triangulaires (81) constituant une chape (82). Celles-ci sont reliées aux troisièmes tronçons latéraux (9, 10).

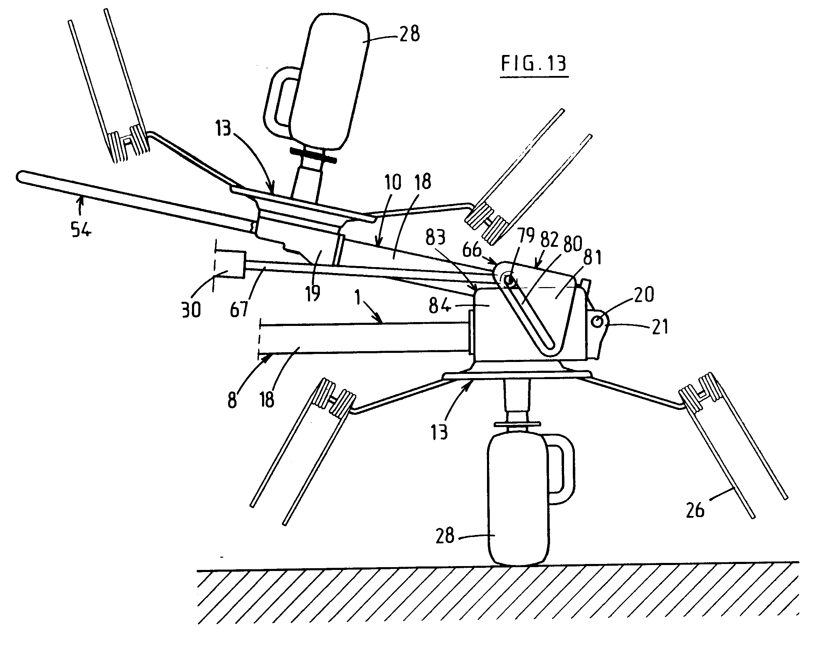

Chaque second tronçon latéral (7, 8) comporte un dispositif de guidage (83) présentant deux plaques parallèles (84) reliées par un bras (85) au boîtier (15) dudit tronçon (7, 8). Ces deux plaques (84) sont sensiblement rectangulaires. Elles sont écartées de telle sorte que la tige (67) du vérin (29, 30) puisse passer entre elles. L'épaisseur totale du dispositif de guidage (83) est cependant inférieure à l'écartement entre les deux plaques (81) qui forment la chape (82). Il peut ainsi se loger entre lesdites plaques (81) lorsque le troisième tronçon latéral (9, 10) correspondant est replié autour de son axe d'articulation (20). La hauteur de ces plaques (84) de chaque dispositif de guidage (83) est telle que dans la position repliée du troisième tronçon latéral (9, 10) correspondant, les orifices (80) des plaques (81) de la chape (82) dépassent légèrement vers le haut lesdites plaques (84) (voir figure 13).

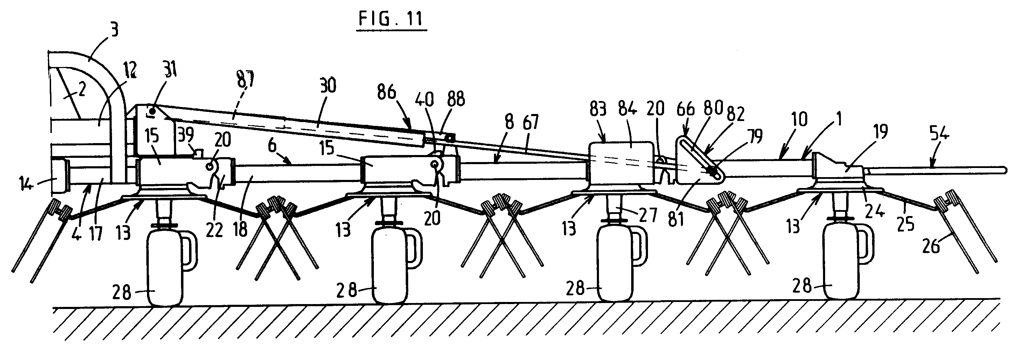

Cette machine comporte en sus deux dispositifs d'arrêts télescopiques (86) pour supporter les tronçons latéraux (5 à 10) (voir notamment les figures 10 et 11). Chacun de ces dispositifs (86) est situé au-dessus d'un des premiers tronçons latéraux (5, 6) et est constitué par deux barres télescopiques (87 et 88) dont l'une est articulée sur le tronçon central (4) et l'autre sur l'embout (22) du second tronçon latéral (7 ou 8). La barre (88) est coulissante dans l'autre barre (87). Cette dernière a une section en forme de C. Elle comporte également une butée pour limiter les déplacements vers l'extérieur de la barre coulissante (88).

Chaque dispositif d'arrêt (86) porte en sus un dispositif de blocage (89) permettant d'immobiliser les deux barres (87 et 88) lorsque la barre coulissante est engagée au maximum dans l'autre. A cet effet, la barre coulissante (88) comporte un tenon latéral (90) qui coulisse dans l'ouverture du profil en C de l'autre barre (87). Sur cette dernière est fixée une lame (91) en acier à ressort, qui est munie d'un trou dans lequel peut se loger le tenon (90). Ceci se passe automatiquement lorsque la barre coulissante (88) rentre totalement dans l'autre barre (87). Ladite lame (91) bloque alors les deux barres (87 et 88). Celles-ci immobilisent par conséquent les tronçons latéraux (5 à 10) dans la position repliée pour le transport. Un câble de manoeuvre (92) est relié à la lame (91). En tirant sur celui-ci on éloigne la lame (91) et libère le tenon (90). De cette manière on peut débloquer les deux barres (87 et 88) et les tronçons latéraux (5 à 10). Chaque câble (92) s'étend avantageusement vers l'avant afin d'être accessible à partir du siège du tracteur.

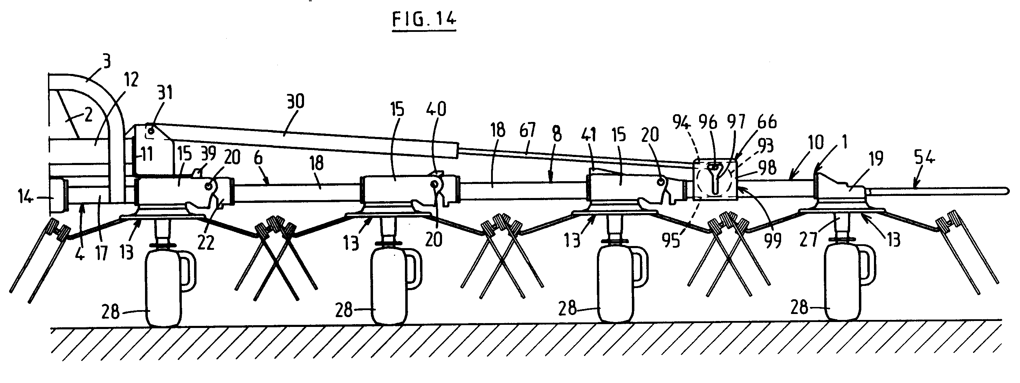

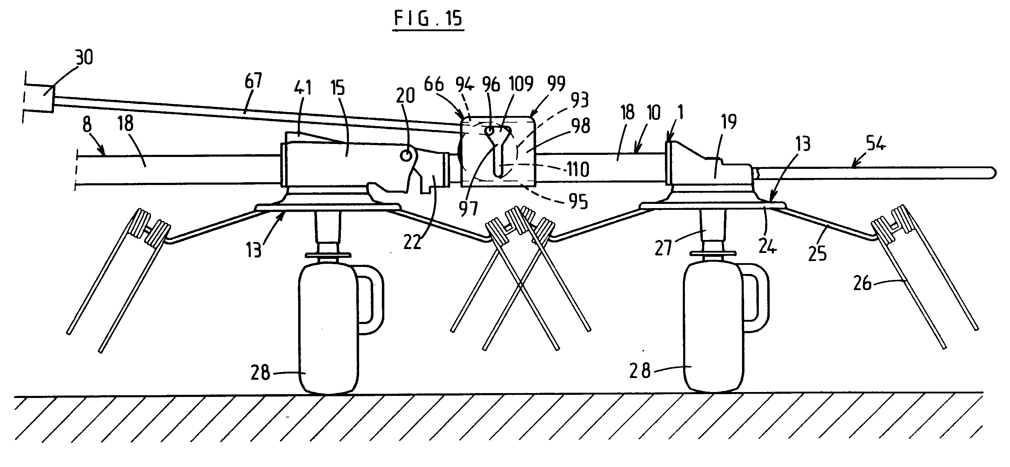

Dans l'exemple de réalisation représenté sur les figures 14 à 18 le châssis (1) de la machine et les rotors (13) sont également comparables à ceux des exemples décrits précédemment. Entre chaque vérin hydraulique (29, 30) et le troisième tronçon latéral (9, 10) correspondant sont prévus des moyens (66) pour assurer un important bras de levier. Pour chaque vérin (29, 30) ces moyens sont constitués par un disque (93) solidaire de sa tige (67), lequel disque (93) est logé entre deux guides (94 et 95) et comporte un tourillon (96) dont les deux extrémités se situent dans des orifices identiques (97) prévus dans deux plaques (98) reliées au troisième tronçon latéral (9, 10) correspondant. Ces plaques (98) sont parallèles entre elles et forment une chape (99). Le tourillon (96) de chaque disque (93) est excentré et se situe près du bord de celui-ci. Les orifices (97) présentent deux branches (109, 110) disposées en forme de T. Les guides (94 et 95) de chaque disque (93) et les branches supérieures (109) des orifices (97) sont sensiblement parallèles au tube (18) du troisième tronçon latéral (9, 10). Les branches (110) des orifices (97) sont sensiblement perpendiculaires audit tube. Le guide (94) se situe au-dessus dudit disque (93) et l'autre (95) en-dessous de ce dernier lorsque le troisième tronçon latéral (9, 10) correspondant est dans une position sensiblement horizontale (voir figure 14 ou 15). Le guide inférieur (95) est constitué par une entretoise s'étendant entre les deux plaques (98). Le guide supérieur (94) est constitué par deux rails dont chacun est fixé sur une des plaques (98). Ces rails sont espacés l'un de l'autre afin de laisser le passage dégagé pour la tige (67) du vérin hydraulique (29 ou 30).

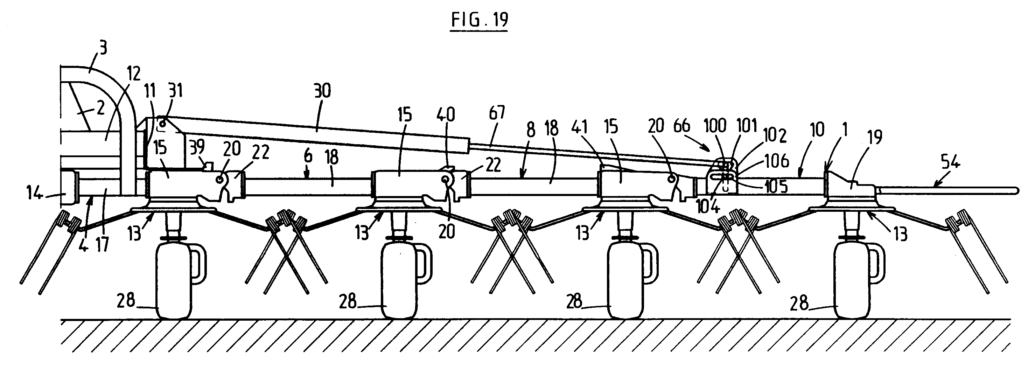

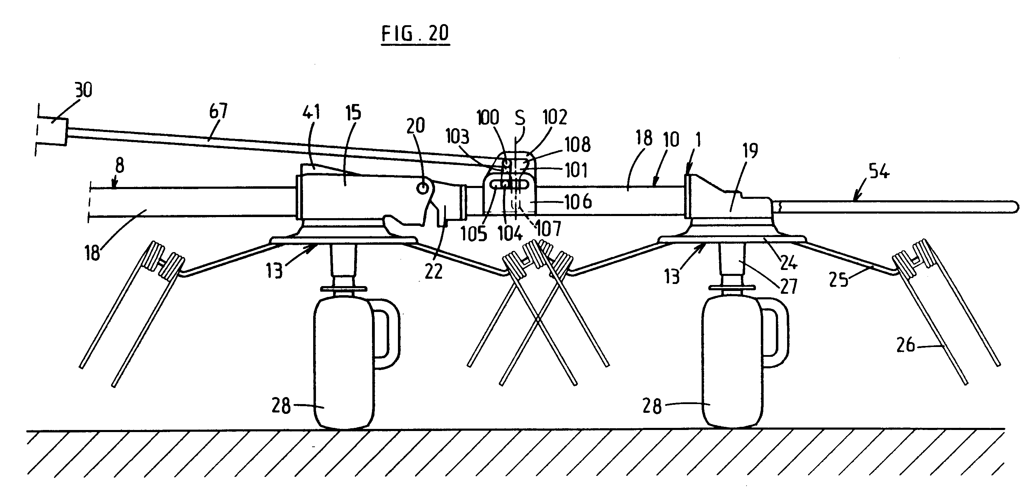

La machine de l'exemple de réalisation selon les figures 19 à 23 est constituée de la même manière que celles des exemples décrits précédemment excepté en ce qui concerne les moyens (66) qui assurent un important bras de levier lorsque les vérins hydrauliques (29, 30) agissent sur les tronçons latéraux (5 à 10). Pour chacun de ces vérins (29, 30) ces moyens (66) sont constitués par un tourillon (100) qui est solidaire de la tige (67) et qui est engagé dans un orifice (101) en forme de T d'une plaque (102) et, par une patte (103) également solidaire de la tige (67), laquelle patte (103) est sensiblement perpendiculaire à ladite tige (67) et comporte un autre tourillon (104) qui est logé dans un orifice oblong (105) d'une plaque (106). Ces plaques (102 et 106) sont sensiblement parallèles entre elles et sont reliées au tube (18) du troisième tronçon latéral (9, 10). Vu dans le sens de déplacement (A) la plaque (102) se situe derrière la tige (67) tandis que la plaque (106) se situe devant ladite tige. De ce fait le tourillon (100) s'étend vers l'arrière et l'autre tourillon (104) vers l'avant. Ils sont en sus excentrés l'un par rapport à l'autre. Il ressort notamment de la figure 20 que l'orifice de guidage (101) en forme de T comporte une branche (107) sensiblement perpendiculaire au tube (18) et une branche (108), plus courte, qui est sensiblement parallèle audit tube. L'orifice oblong (105) est sensiblement parallèle à la branche (108). Il s'étend à peu près à mi-distance entre les deux extrémités de la branche (107). La longueur de cet orifice (105) est déterminée par rapport à un plan de symétrie (S) de l'orifice (101). A partir de ce plan S il s'étend d'un côté, en direction du rotor extérieur (13) aussi loin que la branche (108) de l'orifice (101) et, de l'autre côté, en direction du rotor (13) du second tronçon latéral (7, 8), sur une distance égale à la moitié de la longueur de la branche (107) de l'orifice (101).

Dans la position de travail la machine selon le premier exemple de réalisation occupe la position représentée sur les figures 1 et 2. Elle est alors accouplée à un tracteur et peut être déplacée par celui-ci dans le sens de la flèche (A). Tous les tronçons latéraux (5 à 10) sont déployés et sont portés par les roulettes (28) qui reposent sur le sol. Les rotors (13) sont entraînés en rotation autour des axes support (27) de manière à tourner deux à deux en convergence à l'avant. Leurs fourches (26) ramassent alors les produits, par exemple des brins d'herbe coupés, se trouvant au sol, les déplacent vers l'arrière et les étalent à nouveau tout en provoquant leur retournement. Les différents rotors (13) peuvent suivre les dénivellations du sol en pivotant avec les tronçons (4 à 10) autour des axes d'articulation (20) de ces derniers. Dans la position horizontale, les tourillons (33) des vérins hydrauliques (29, 30) se situent au milieu des orifices (34). Les troisièmes tronçons latéraux (9, 10) peuvent ainsi pivoter librement vers le haut et vers le bas autour de leurs axes d'articulation (20).

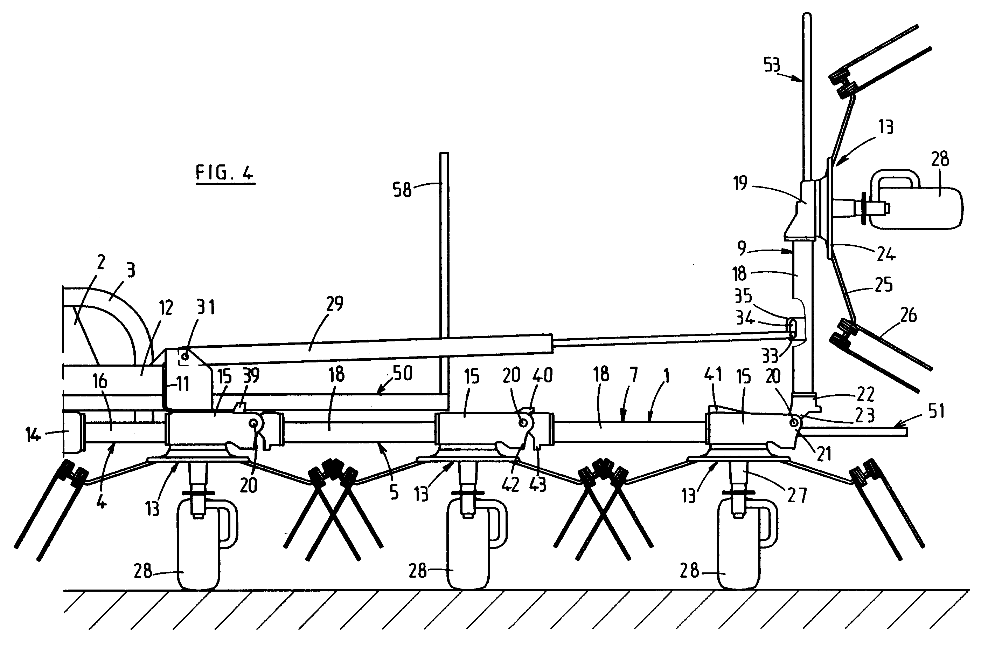

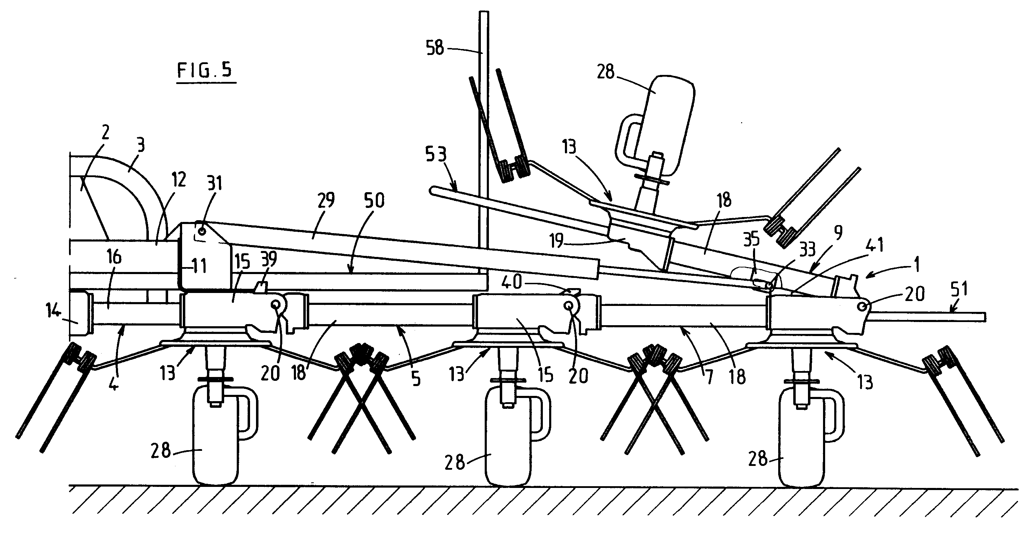

Pour amener cette machine dans la position de transport les vérins hydrauliques (29, 30) sont actionnés pour qu'ils se rétractent. Leurs tourillons (33) se déplacent alors jusqu'à ce qu'ils soient dans les extrémités des orifices (34). Ensuite, dans une première phase, les troisièmes tronçons latéraux (9, 10) pivotent autour de leurs axes d'articulation (20) avec les seconds tronçons (7, 8) jusqu'à ce qu'ils touchent les butées (41) prévues sur ces derniers (figure 5). L'angle de pivotement de chacun de ces troisièmes tronçons latéraux (9, 10) a une valeur comprise entre 150° et 180°. Il est à noter que durant toute cette phase les tourillons (33) restent dans les mêmes extrémités des orifices (34) de sorte que les vérins hydrauliques (29, 30) maintiennent constamment ces tronçons (9, 10) et les empêchent de basculer librement vers les seconds tronçons latéraux (7, 8) lorsqu'ils ont dépassé la position verticale (voir figures 4 et 5). Dans une deuxième phase les tourillons (33) se déplacent dans les extrémités opposées des orifices (34) et entraînent les troisièmes et seconds tronçons latéraux (9, 10 et 7, 8) autour des axes d'articulation (20) avec les premiers tronçons latéraux (5, 6). Ce pivotement a lieu jusqu'à ce que les embouts (22) des seconds tronçons latéraux (7, 8) rencontrent les butées (40). Les angles de pivotement autour de ces axes d'articulation (20) ont une valeur comprise entre 5° et 12°.

Dans une troisième phase tous les tronçons latéraux (5 à 10) pivotent ensemble par rapport au tronçon central (4) autour des axes d'articulation (20) avec ce dernier, jusqu'à ce qu'ils arrivent dans la position représentée sur la figure 3. Ces pivotements sont limités par les butées (39) prévues sur les boîtiers (15) du tronçon central (4). La valeur des angles de pivotement est comprise entre 75° et 90°. Dès que les vérins hydrauliques (29, 30) sont complètement rétractés, les extrémités dirigées vers l'avant des tourillons (33) soulèvent automatiquement les lames (48) des dispositifs de verrouillage (44) et s'engagent dans les orifices prévus dans lesdites lames. Celles-ci bloquent alors les vérins hydrauliques (29, 30) et, par l'intermédiaire de ceux-ci, les tronçons latéraux (5 à 10) du châssis (1) de la machine.

Dans cette position les premiers et seconds tronçons latéraux (5, 6 et 7, 8) sont dirigés vers le haut tandis que les troisièmes tronçons latéraux (9, 10) sont dirigés vers le bas à partir de leurs axes d'articulation respectifs. La largeur et la hauteur de la machine sont ainsi réduites de sorte qu'elle puisse être déplacée sans difficulté sur les routes et les chemins. Cette position peut aussi avantageusement être utilisée pour entreposer la machine pendant les périodes de l'année où elle n'est pas utilisée.

Pour déployer les tronçons latéraux (5 à 10) en vue de transposer la machine dans la position de travail, il faut tout d'abord tirer sur les câbles (46) pour déplacer les leviers (45) et les lames (48) de sorte que ces dernières libèrent les tourillons (33). Les vérins hydrauliques (29, 30) peuvent alors être actionnés pour qu'ils s'allongent. Dans une première phase, tous les tronçons latéraux (5 à 10) pivotent vers le bas autour des axes d'articulation (20) avec le tronçon central (4). Ce pivotement s'effectue essentiellement sous l'effet du propre poids des tronçons latéraux (5 à 10). Les vérins hydrauliques (29, 30) permettent alors essentiellement de contrôler la descente desdits tronçons latéraux. Lorsque les premiers et les seconds tronçons latéraux (5, 6 et 7, 8) touchent le sol, les vérins hydrauliques (29, 30) poussent les tourillons (33) dans les extrémités opposées des orifices (34) et exercent une pression sur les troisièmes tronçons (9, 10) (figure 5). Durant cette deuxième phase ces troisièmes tronçons (9, 10) pivotent vers l'extérieur, autour de leurs axes d'articulation (20), jusqu'à ce que leurs roulettes (28) touchent également le sol. Durant le travail, les efforts s'exerçant sur les tronçons latéraux (5 à 10) par suite des déplacements sur le sol, sont partiellement supportés par les tirants (64). Ces derniers soulagent ainsi notamment les articulations (20) avec le tronçon central (4). Lors des déplacements de la position de travail dans la position de transport et inversement ces tirants (64) pivotent avec les premiers tronçons latéraux (5, 6). De même, durant ces déplacements les parties (51, 52 et 53, 54) du dispositif de protection (49) pivotent respectivement avec les seconds et les troisièmes tronçons latéraux (7, 8 et 9, 10). Au cas où la machine doit être soulevée alors qu'elle est en position déployée, les vérins hydrauliques (29 et 30) supportent une partie du poids des tronçons latéraux (5 à 10). Ceci évite une trop forte sollicitation de leurs butées (42 et 43) et permet de dégager toutes les roulettes (28) du sol.

Sur la machine selon l'exemple de réalisation des figures 6 à 9 tous les rotors (13) sont également sensiblement alignés et entraînés en rotation dans la position de travail (voir figure 6). Les tourillons (68) des vérins hydrauliques (29, 30) se situent alors sensiblement au milieu des branches (70) des orifices (69). Les troisièmes tronçons latéraux (9, 10) peuvent ainsi se déplacer d'un certain angle par rapport aux vérins hydrauliques (29, 30) afin de bien suivre les dénivellations du sol. Dans cette position de travail les guides (75) ont basculé vers le bas en direction du sol et ferment l'accès aux branches (72) des orifices (69).

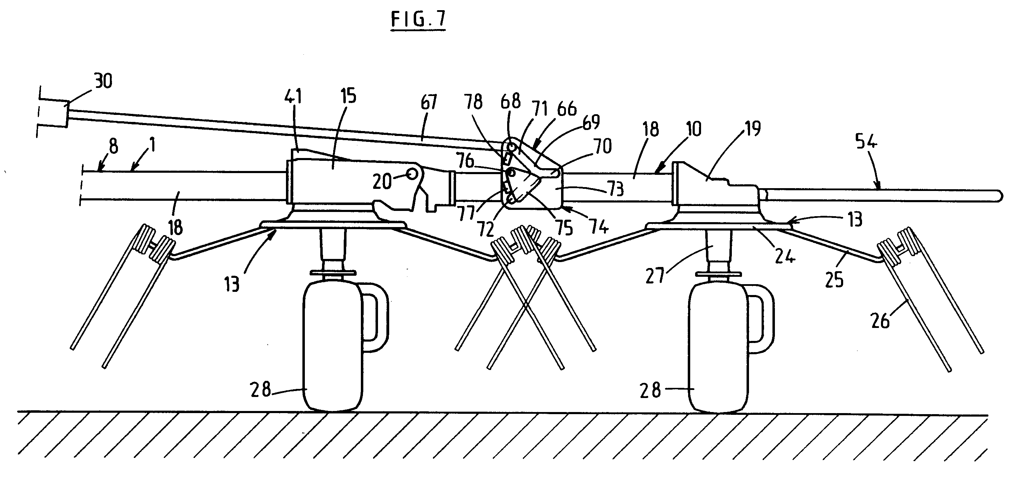

Pour le transport les tronçons latéraux (5 à 10) et leurs rotors (13) sont repliés et occupent la même position que celle représentée sur la figure 3. Pour amener les tronçons latéraux (5 à 10) dans cette position les vérins hydrauliques (29, 30) sont actionnés de sorte qu'ils se rétractent. Leurs tourillons (68) se déplacent alors dans les orifices (69) et montent automatiquement dans les branches obliques (71). Ces tourillons (68) se déplacent ainsi vers le haut par rapport aux axes d'articulation (20), ce qui a pour effet d'augmenter le bras de levier lorsque les vérins hydrauliques (29, 30) tirent sur les troisièmes tronçons latéraux (9, 10) (voir figure 7). Ces derniers pivotent alors, dans une première phase, autour des axes d'articulation (20) avec les seconds tronçons latéraux (7, 8), jusqu'à ce qu'ils rencontrent les butées (41). Durant ce pivotement les tourillons (68) restent dans les extrémités des branches (71) et maintiennent les troisièmes tronçons latéraux (9, 10).

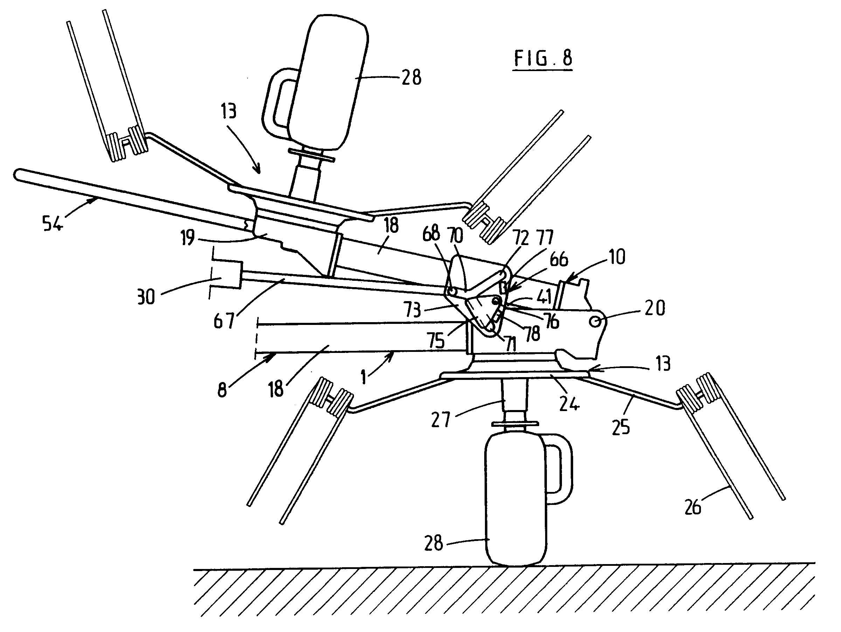

Dès que ces troisièmes tronçons (9, 10) reposent sur les butées (41) les tourillons (68), par suite de la traction des vérins hydrauliques (29, 30), sortent des branches (71) des orifices (69) et s'engagent automatiquement dans les branches (70). A partir de cette position qui est représentée sur la figure 8, débute la deuxième phase. Durant celle-ci les troisièmes et seconds tronçons latéraux (9, 10 et 7, 8) pivotent autour de leurs axes d'articulation (20) avec les premiers tronçons latéraux (5, 6) jusqu'à ce qu'ils rencontrent les butées (40) prévues sur les boîtiers (15) de ces derniers. Dans la phase suivante tous les tronçons latéraux (5 à 10) pivotent autour des axes d'articulation (20) avec le tronçon central (4) jusque dans la position de transport.

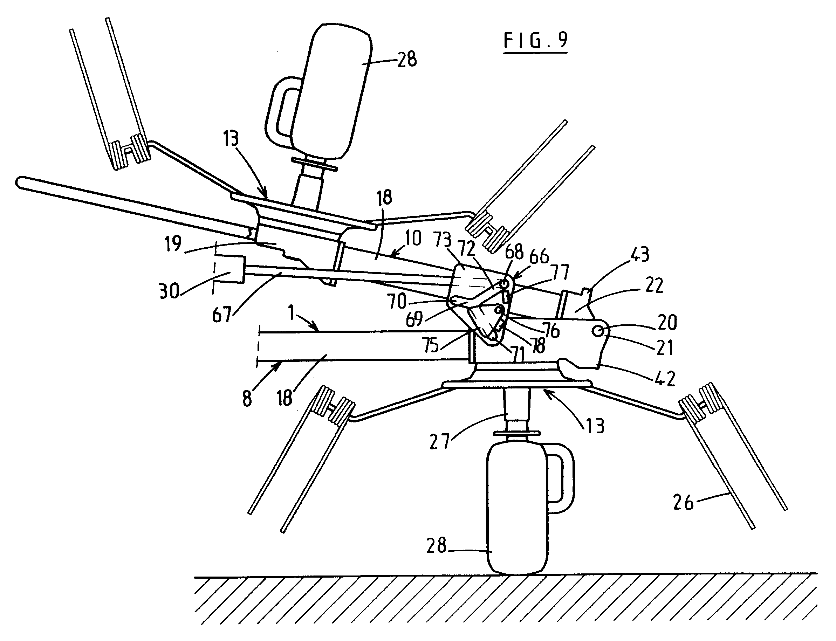

Inversement pour déployer les tronçons latéraux (5 à 10) les vérins hydrauliques (29, 30) sont actionnés de manière à ce qu'ils s'allongent. Dans la première phase tous les tronçons latéraux (5 à 10) pivotent vers le bas jusqu'à ce que les roulettes (28) des rotors (13) des premiers et des seconds tronçons (5, 6 et 7, 8) touchent le sol. Les tourillons (68) et les vérins hydrauliques (29, 30) se situent alors dans la position illustrée sur la figure 8. Les guides mobiles (75) se placent alors sous l'effet de leur propre poids contre les butées (78) et empêchent les tourillons (68) d'accéder dans les branches (71). Ainsi, sous l'effet de la pression des vérins hydrauliques (29, 30), les tourillons (68) s'engagent automatiquement dans les branches (72) qui sont dirigées vers le haut (voir figure 9). Les bras de levier avec lesquels lesdits vérins poussent sur les troisièmes tronçons latéraux (9, 10) sont ainsi augmentés. Ces tronçons (9, 10) pivotent alors vers l'extérieur, autour de leurs axes d'articulation (20), jusqu'à ce que leurs roulettes (28) touchent le sol.

Cette machine comporte également des dispositifs d'arrêts (86) identiques à ceux décrits en liaison avec l'exemple de réalisation selon les figures 10 à 13. Durant les transpositions des seconds tronçons latéraux (7, 8) les barres coulissantes (88) de ces dispositifs (86) glissent, par rapport aux barres fixes (87). Dans la position de transport ces deux barres (87 et 88) sont bloquées l'une par rapport à l'autre, de sorte qu'elles immobilisent les tronçons latéraux (5 à 10). Dans la position de travail les barres (88) glissent dans les barres (87) pour permettre aux tronçons latéraux (5 à 10) de suivre les dénivellations du sol. Toutefois, lorsque la machine est soulevée dans la position déployée ces dispositifs (86) portent partiellement les tronçons latéraux (5 à 10). Ils évitent ainsi l'écrasement des butées (42 et 43) des articulations (20) entre le tronçon central (4) et les premiers tronçons latéraux (5, 6) et entre ces derniers et les deuxièmes tronçons latéraux (7, 8). Ils permettent aussi le dégagement du sol de toutes les roulettes (28).

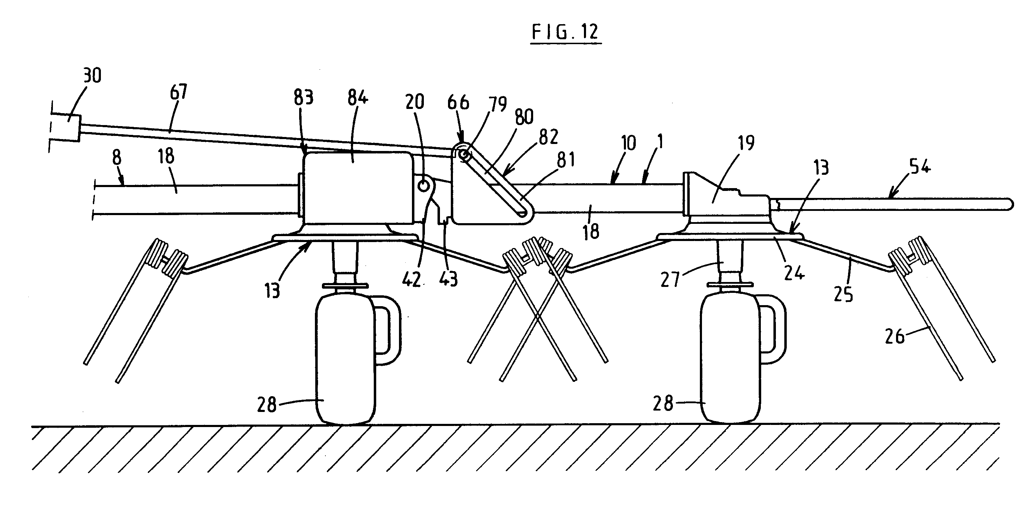

Dans l'exemple de réalisation selon les figures 10 à 13 les tronçons (4 à 10) du châssis (1) et les rotors (13) occupent les mêmes positions de travail et de transport que dans les exemples précités. Comme cela ressort notamment des figures 10 et 11, les tourillons (79) des vérins hydrauliques (29, 30) se situent dans le tiers inférieur des orifices (80) dans la position de travail. Lorsque ces vérins (29, 30) sont actionnés pour amener la machine dans la position de transport, lesdits tourillons (79) se déplacent tout d'abord vers le haut dans les orifices (80). Ils se placent alors dans la position représentée sur la figure 12, dans laquelle les bras de levier, lorsque les vérins hydrauliques (29, 30) tirent sur les troisièmes tronçons latéraux (9, 10), sont importants. Dans une première phase ces derniers pivotent autour de leurs axes d'articulation (20) jusqu'à ce qu'ils touchent les butées (41) prévues sur les boîtiers (15) des seconds tronçons latéraux (7, 8). On voit sur la figure 13 que durant ce pivotement les deux plaques (81) de chaque troisième tronçon latéral (9, 10) enfourchent un des dispositifs de guidage (83). Ces dispositifs arrêtent alors les tourillons (79) de sorte qu'ils glissent automatiquement jusque dans l'autre extrémité des orifices (80), au fur et à mesure que les troisièmes tronçons latéraux (9, 10) pivotent vers le bas après avoir passé la position verticale. Ce faisant, les tourillons (79) retiennent les troisièmes tronçons latéraux (9, 10) et les empêchent de basculer brutalement vers les butées (41). Ensuite, suivent immédiatement la deuxième et la troisième phase pendant lesquelles les tronçons latéraux (5 à 10) sont déplacés vers le haut et sont amenés dans une position de transport identique à celle qui est représentée sur la figure 3. Dans cette position les barres coulissantes (88) des dispositifs d'arrêts (86) sont rétractées et les tenons (90) se sont logés dans les trous prévus dans les lames (91). Celles-ci bloquent alors les barres coulissantes (88) et, par l'intermédiaire de ces dernières, immobilisent les tronçons latéraux (5 à 10).

Pour transposer la machine dans la position de travail, il faut libérer les tenons (90) en dégageant les lames (91) avec les câbles (92) et actionner les vérins hydrauliques (29, 30) pour qu'ils s'allongent. Les tronçons latéraux (5 à 10) pivotent alors vers le bas jusqu'à ce que les roulettes (28) des rotors (13) des premiers et seconds tronçons latéraux (5, 6 et 7, 8) touchent le sol. Les vérins hydrauliques (29, 30) et les tourillons (79) occupent alors à nouveau la position représentée sur la figure 13, dans laquelle ils se situent nettement au-dessus des axes d'articulation (20). Dès lors, les vérins (29, 30) poussent avec un important bras de levier sur les troisièmes tronçons latéraux (9, 10) afin qu'ils pivotent autour de leurs axes d'articulation (20). Durant ce pivotement les tourillons (79) glissent sur les dispositifs de guidage (83) et se déplacent progressivement dans les extrémités opposées des orifices (80). Ainsi, dès que les tronçons (9, 10) ont dépassé la position verticale et qu'ils descendent vers le sol sous l'effet de leur propre poids, les vérins hydrauliques (29, 30) les retiennent afin d'éviter des basculements brusques.

Les dispositifs d'arrêts (86) s'allongent également lorsque les tronçons latéraux (7, 8) se déplacent dans la position de travail. Cependant, si la machine est soulevée au moyen du dispositif de relevage du tracteur, ces dispositifs d'arrêts (86) portent partiellement les tronçons latéraux (5 à 10).

Dans l'exemple de réalisation selon les figures 14 à 18 les tronçons latéraux (5 à 10) et les rotors (13) occupent aussi les mêmes positions au travail et au transport que celles qui ont été décrites en liaison avec l'exemple de réalisation des figures 1 à 5. Lorsque les rotors (13) sont dans la position de travail tel que cela est représenté sur la figure 14, les tourillons (96) des vérins hydrauliques (29, 30) se situent dans les branches supérieures (109) des orifices (97). Les plaques (98), peuvent ainsi se déplacer d'une certaine distance par rapport auxdits tourillons pour permettre aux tronçons latéraux (5 à 10) de suivre les dénivellations du sol.

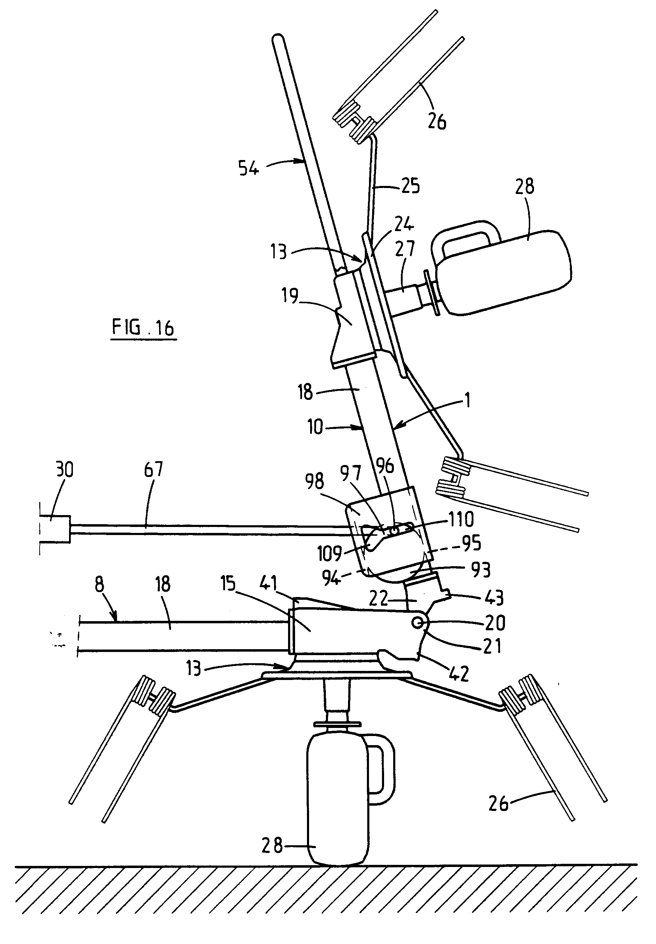

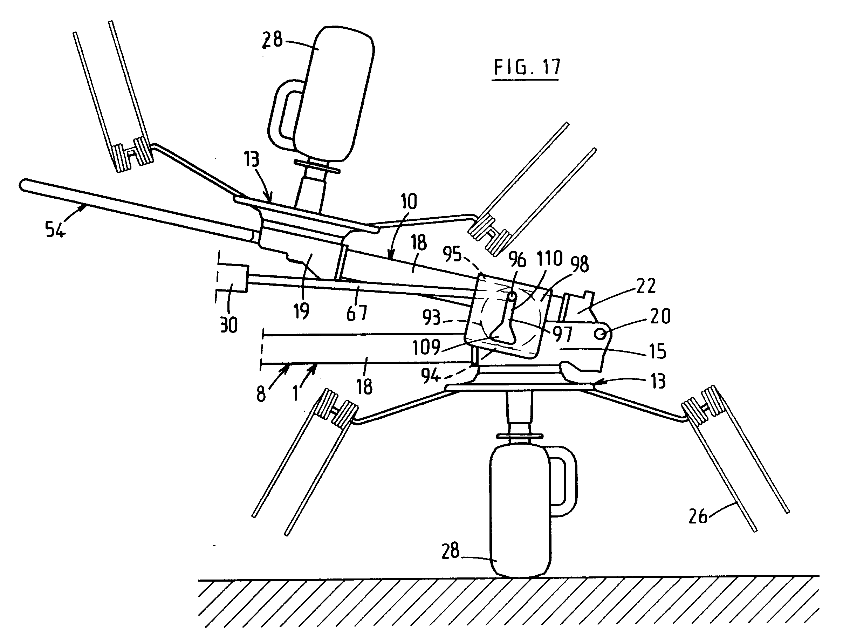

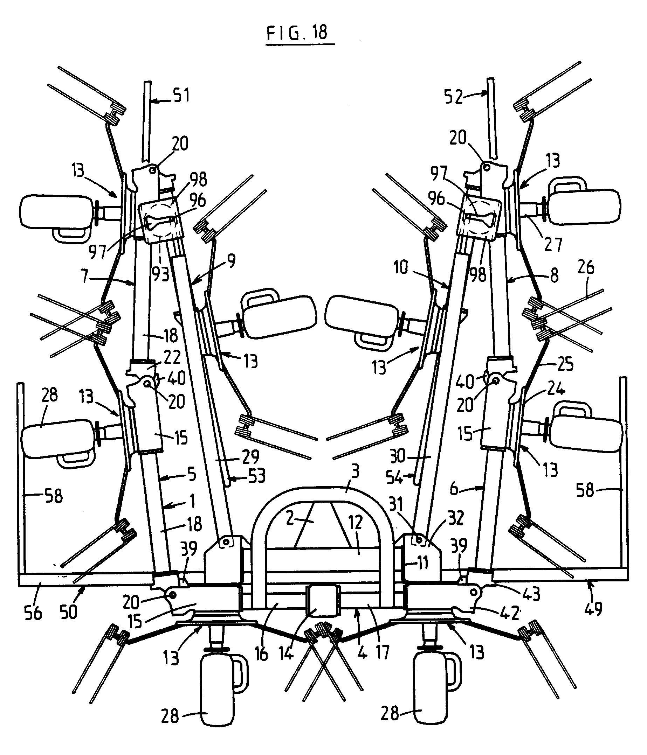

Pour amener ces tronçons latéraux (5 à 10) dans la position de transport représentée sur la figure 18, il faut actionner les vérins hydrauliques (29, 30) pour qu'ils se rétractent. Comme les tourillons (96) se situent dans le haut des orifices (97), les vérins hydrauliques (29, 30) tirent avec un important bras de levier sur les troisièmes tronçons latéraux (9, 10). Dans la première phase les tourillons (96) butent contre les extrémités des branches supérieures (109) (figure 15) et ensuite les troisièmes tronçons latéraux (9 et 10) pivotent autour de leurs axes d'articulation (20) jusqu'à ce qu'ils touchent les butées (41) sur les boîtiers (15) des seconds tronçons latéraux (7, 8) (figures 16 et 17). Durant ce pivotement les tourillons (96) et les disques (93) se déplacent par rapport aux troisièmes tronçons latéraux (9, 10). Lesdits tourillons glissent ainsi dans les branches (110) des orifices (97) de sorte qu'à la fin de la première phase ils se situent à nouveau nettement au-dessus des axes d'articulation (20). Les disques (93) demeurent constamment entre les guides (94 et 95) et coopèrent avec eux pour empêcher les troisièmes tronçons latéraux (9, 10) de basculer brutalement autour de leurs axes d'articulation (20).

Après cette première phase de pivotement les vérins hydrauliques (29, 30) continuent leur traction et exécutent successivement la deuxième et la troisième phase. Dans la position de transport (figure 18) les tronçons latéraux (5 à 10) peuvent être immobilisés au moyen de dispositifs de verrouillage (44) identiques à ceux représentés sur la figure 1.

Pour transposer la machine de la position de transport dans la position de travail il faut débloquer les vérins hydrauliques (29, 30) et les actionner pour qu'ils s'allongent. Les tronçons latéraux (5 à 10) pivotent alors vers le bas jusqu'à ce que les roulettes (28) des rotors (13) des premiers et seconds tronçons latéraux (5, 6 et 7, 8) touchent le sol. Dans cette position (figure 17) les tourillons (96) se situent nettement au-dessus d'un plan horizontal passant par les axes d'articulation (20) des troisièmes tronçons (9, 10). Les vérins hydrauliques (29, 30) poussent alors sur ces troisièmes tronçons (9, 10) avec un important bras de levier, afin de les faire pivoter autour de leurs axes d'articulation (20). Durant ce pivotement les disques (93) et les guides (94 et 95) empêchent à nouveau les tronçons (9, 10) de basculer librement autour des axes d'articulation (20) et les tourillons (96) reprennent progressivement la position représentée sur la figure 14.

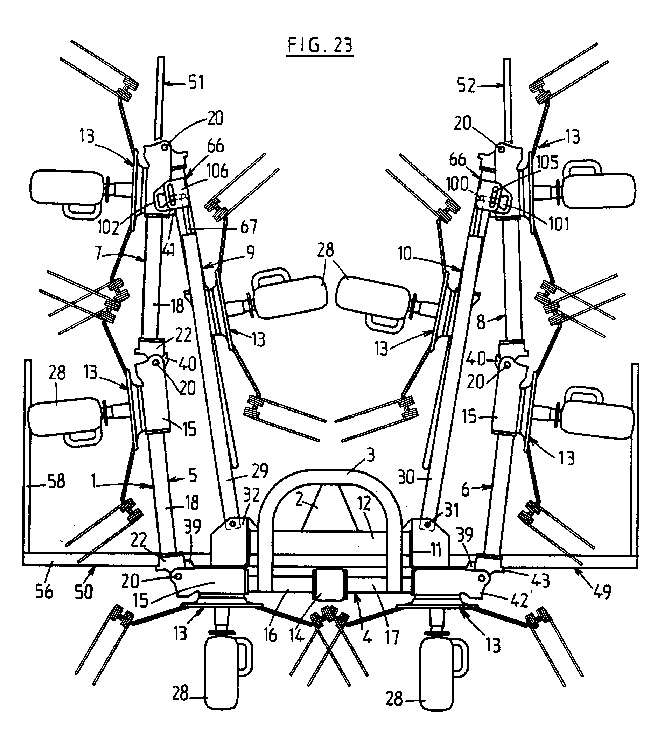

La machine de l'exemple de réalisation qui est illustré sur les figures 19 à 23 présente dans la position de travail et dans la position de transport les mêmes caractéristiques que les machines qui ont été décrites précédemment. Il ressort clairement de la figure 19 qu'au travail les tronçons latéraux (5 à 10) sont déployés. De même, au transport (figure 23) les premiers et seconds tronçons latéraux (5, 6 et 7, 8) sont dirigés vers le haut et les troisièmes tronçons latéraux (9, 10) sont dirigés vers le bas.

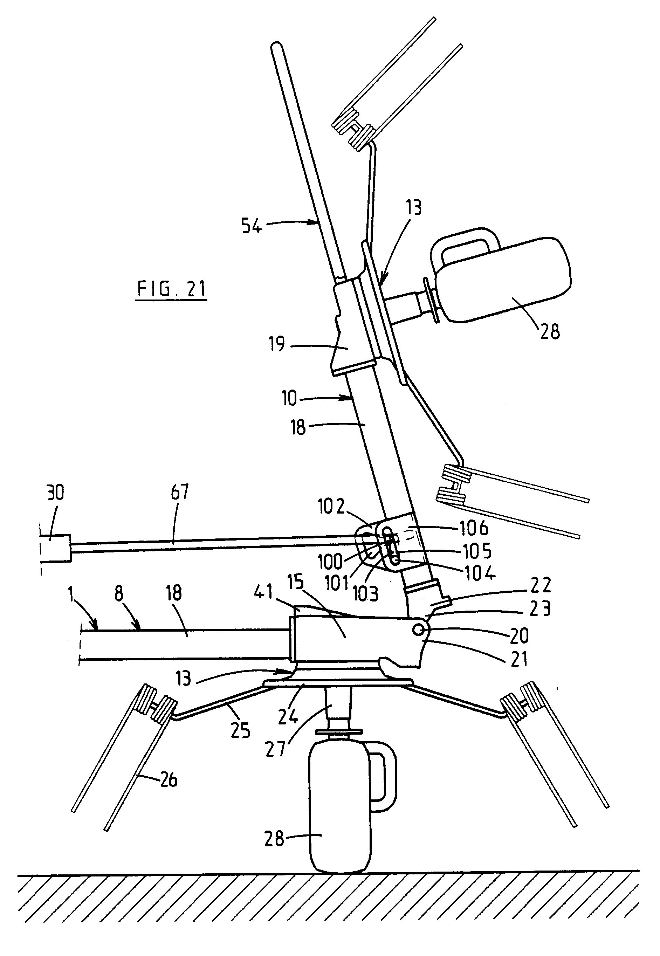

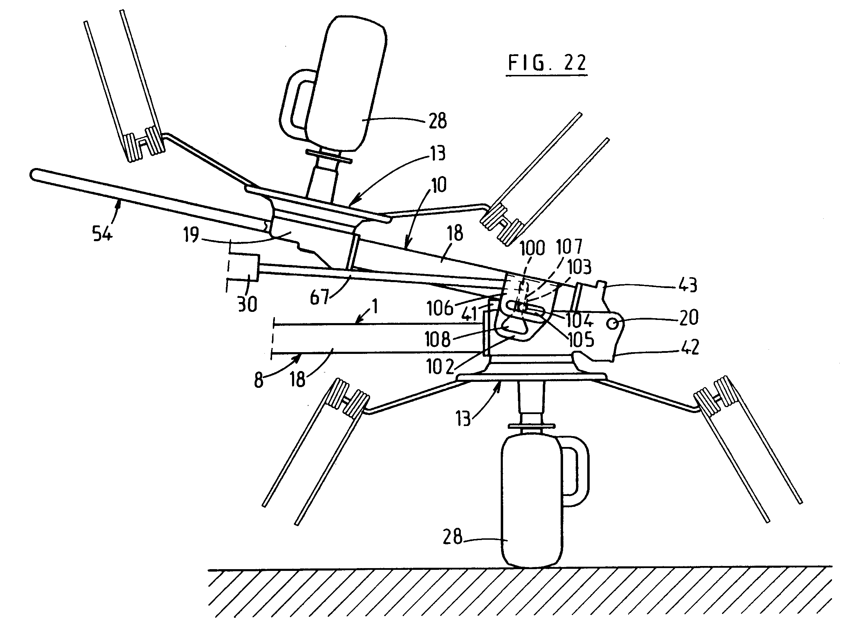

Durant le travail les plaques (102 et 106) peuvent se déplacer par rapport aux tourillons (100 et 104) afin de permettre aux tronçons latéraux (5 à 10) de suivre les dénivellations du sol. Pour amener ces tronçons latéraux (5 à 10) dans la position de transport les vérins hydrauliques (29, 30) sont actionnés de sorte qu'ils se rétractent. Dès lors, les tourillons (100 et 104) se déplacent respectivement dans les orifices (101 et 105) jusqu'à ce que les tourillons (100) arrivent dans les extrémités des branches (108), comme cela est représenté sur la figure 20. Ces tourillons (100) entraînent alors les troisièmes tronçons (9, 10) et les font pivoter autour de leurs axes d'articulation (20). En raison de la grande distance entre ces tourillons (100) et un plan horizontal passant par les axes d'articulations (20) les bras de levier exercés par les vérins hydrauliques (29, 30) sur les troisièmes tronçons latéraux (9, 10) sont importants. Durant le pivotement de ces tronçons (9, 10) les tourillons (100) se déplacent progressivement dans les branches (107) des orifices (101), tandis que les autres tourillons (104) avancent dans leurs orifices (105) (voir figure 21). De chaque côté de la machine, les deux tourillons (100 et 104) coopèrent alors pour faire pivoter les troisièmes tronçons latéraux (9, 10) et pour les empêcher de basculer. Dès la fin de la première phase de pivotement les tourillons (100) se situent dans les extrémités des branches (107). Cette position est représentée sur la figure 22. Ils sont ainsi à nouveau éloignés d'un plan horizontal passant par les axes d'articulation (20). Les vérins hydrauliques (29, 30) font alors pivoter les tronçons latéraux (5 à 10) suivant la deuxième et la troisième phase de manière à les amener dans la position de transport. Des dispositifs de verrouillage (44) peuvent également être prévus pour bloquer les tronçons latéraux (5 à 10) dans cette position.

Pour amener les tronçons latéraux (5 à 10) dans la position de travail les vérins hydrauliques (29, 30) sont actionnés de manière à ce qu'ils s'allongent. Dans un premier temps tous les tronçons (5 à 10) pivotent vers le bas jusqu'à ce que les roulettes (28) des rotors (13) des premiers et seconds tronçons latéraux (5, 6 et 7, 8) touchent le sol. Ce pivotement s'effectue essentiellement sous l'effet du propre poids de ces tronçons (5 à 10), les vérins hydrauliques (29, 30) servant notamment à contrôler la descente. Ensuite, les vérins hydrauliques (29, 30) poussent sur les troisièmes tronçons (9, 10) afin qu'ils pivotent vers l'extérieur autour de leurs axes d'articulation (20). Comme les tourillons (100) occupent à nouveau au début de cette phase la position représentée sur la figure 22, les vérins hydrauliques (29, 30) poussent sur les tronçons (9, 10) avec un important bras de levier. Au cours de ce pivotement les tourillons (100) reviennent vers les branches (108) de leurs orifices (101) et les tourillons (104) effectuent un aller et retour dans les orifices (105). Ces tourillons (100 et 104) assurent aussi constamment une liaison positive entre les vérins hydrauliques (29, 30) et les plaques (102, 106) des tronçons (9, 10) de sorte que ces derniers ne puissent pas basculer librement.

Il est bien évident que l'invention n'est pas limitée aux modes de réalisation décrits et représentés sur les dessins annexés. Des modifications restent possibles, notamment en ce qui concerne la constitution des divers éléments ou par substitution d'équivalents techniques, sans sortir pour autant du domaine de protection tel que défini dans les revendications.

## Revendications

1. Machine de fenaison comportant un châssis (1) pouvant être accouplé à un tracteur, lequel châssis (1) se compose d'un tronçon central (4) et de plusieurs tronçons latéraux (5 à 10) qui sont articulés entre eux au moyen d'axes (20) dirigés dans la direction de déplacement et qui portent des rotors (13) entraînés en rotation durant le travail au moyen d'organes de transmission qui sont logés dans les tronçons (4 à 10) du châssis (1), lesdits tronçons latéraux (5 à 10) pouvant être transposés au moyen de vérins hydrauliques (29, 30) dans une position de travail dans laquelle ils sont sensiblement alignés et une position de transport dans laquelle ils sont repliés autour de leurs axes d'articulation, caractérisée par le lait que sur chaque côté du tronçon central (4) sont disposés trois tronçons latéraux (5 à 10) qui sont articulés entre eux au moyen d'axes (20) dirigés dans la direction de déplacement et dont chacun est constitué par un tube (18) et un boîtier (15, 19) muni d'un rotor (13), que les articulations entre les tronçons (4 à 10) sont telles qu'elles permettent que dans la position de transport les premiers et seconds tronçons latéraux (5, 6 et 7, 8) soient dirigés vers le haut et les troisièmes tronçons latéraux (9, 10) soient dirigés vers le bas à partir de leurs axes d'articulation (20) respectifs et que le vérin hydraulique (29, 30) s'étend directement du tronçon central (4) jusqu'à chaque troisième tronçon latéral (9, 10), l'extrémité de chaque vérin hydraulique (29, 30) qui est reliée au troisième tronçon latéral (9, 10) comportant un tourillon (33, 68, 79, 96, 100) qui est logé dans un orifice oblong (34, 69, 80, 97, 101) prévu dans une plaque (35, 73, 81, 98, 102) qui est solidaire dudit troisième tronçon (9, 10).

2. Machine selon la revendication 1, caractérisée par le fait que chaque vérin hydraulique (29, 30) est plus éloigné du sol que les différents axes d'articulation (20) entre les tronçons (4 à 10).

3. Machine selon la revendication 1 ou 2, caractérisée par le fait que chaque vérin hydraulique (29, 30) se situe devant les tronçons latéraux (5 à 10).

4. Machine selon l'une quelconque des revendications précédentes, caractérisée par le fait que la liaison entre chaque vérin hydraulique (29, 30) et le troisième tronçon latéral (9, 10) correspondant comprend des moyens (66) agencés de manière à déplacer le tourillon (68, 79, 96, 100) vers le haut, par rapport à l'axe d'articulation (20), dans son orifice oblong (69, 80, 97, 101) lorsque ledit vérin hydraulique (29, 30) tire ou pousse sur le troisième tronçon latéral (9, 10) dans la phase de démarrage pour le déplacer dans la position de transport ou dans la position de travail.

5. Machine selon la revendication 4, caractérisée par le fait que les vérins hydrauliques (29, 30) sont munis de tourillons (68) qui sont guidés dans des orifices (69) à trois branches (70, 71, 72) en forme de Y, prévus dans des plaques (73) qui sont reliées aux troisièmes tronçons latéraux (9, 10).

6. Machine selon la revendication 5, caractérisée par le fait qu'une (70) des branches de chaque orifice (69) est sensiblement parallèle au tube (18) du troisième tronçon latéral (9, 10) correspondant et que les deux autres branches (71 et 72) sont divergentes et sont dirigées vers le milieu de la machine en position de travail.

7. Machine selon la revendication 5 ou 6, caractérisée par le fait que les plaques (73) comportent un guide mobile (75) pouvant obturer l'entrée de l'une ou l'autre des branches (71, 72) et guidant automatiquement le tourillon (68) du vérin (29, 30) correspondant vers la branche (71 ou 72) qui est dirigée vers le haut.

8. Machine selon la revendication 7, caractérisée par le fait que le guide mobile (75) est articulé sur un pivot (76) et peut tourner autour de celui-ci sous l'effet de son propre poids.

9. Machine selon la revendication 7 ou 8, caractérisée par le fait que les plaques (73) comportent deux butées (77, 78) pour arrêter les guides mobiles (75) dans les positions appropriées.

10. Machine selon la revendication 4, caractérisée par le fait que les vérins hydrauliques (29, 30) sont munis de tourillons (79) logés dans des orifices (80) de forme allongée qui sont prévus dans des plaques (81) solidaires des troisièmes tronçons latéraux (9, 10) et que ces tourillons (79) coopèrent avec des dispositifs de guidage (83) qui sont solidaires des seconds tronçons latéraux (7, 8).

11. Machine selon la revendication 10, caractérisée par le fait qu'en position de travail les orifices (80) sont dirigés obliquement du bas vers le haut en direction du milieu de la machine.

12. Machine selon la revendication 10, caractérisée par le fait que chaque dispositif de guidage (83) est constitué par deux plaques (84) qui retiennent les tourillons (79) dans une position située au-dessus d'un plan horizontal passant par les axes d'articulation (20), lorsque les troisièmes tronçons latéraux (9, 10) sont repliés.

13. Machine selon la revendication 12, caractérisée par le fait que les plaques (81) qui sont solidaires des troisièmes tronçons latéraux (9, 10) enfourchent les plaques (84) des dispositifs de guidage (83) lorsque lesdits tronçons sont repliés.

14. Machine selon la revendication 4, caractérisée par le fait que chaque vérin hydraulique (29, 30) comporte un disque (93) qui est logé entre deux guides (94 et 95) prévus sur des plaques (98) qui sont reliées au troisième tronçon latéral (9, 10) correspondant, lequel disque (93) comporte un tourillon excentré (96) qui est logé dans des orifices (97) desdites plaques (98).

15. Machine selon la revendication 14, caractérisée par le fait que les orifices (97) présentent deux branches (109 et 110) disposées en forme de T, les branches supérieures (109) étant sensiblement parallèles au tube (18) du troisième tronçon latéral (9, 10) correspondant et les autres branches (110) étant sensiblement perpendiculaires audit tube.

16. Machine selon la revendication 14, caractérisée par le fait qu'en position de travail les guides (94 et 95) se situent au-dessus et en-dessous des disques (93) et qu'ils coopèrent avec les disques (93) pour maintenir les tronçons latéraux (9, 10) durant leurs déplacements autour des axes (20).

17. Machine selon l'une quelconques des revendications 14 à 16, caractérisée par le fait qu'en position de travail les tourillons (96) se situent dans les branches supérieures (109) des orifices (97) et qu'en position de transport, ils se situent dans les extrémités opposées des branches (110).

18. Machine selon la revendication 4, caractérisée par le fait que la tige (67) de chaque vérin hydraulique (29, 30) comporte un tourillon (100) qui est engagé dans un orifice (101) en forme de T d'une plaque (102) solidaire du troisième tronçon latéral (9, 10) correspondant et, une patte (103) qui est munie d'un tourillon (104) logé dans un orifice oblong (105) d'une seconde plaque (106) qui est également solidaire du troisième tronçon latéral (9, 10) correspondant.

19. Machine selon la revendication 18, caractérisée par le fait que la patte (103) est sensiblement perpendiculaire à la tige (67) du vérin hydraulique (29, 30) correspondant.

20. Machine selon la revendication 18, caractérisée par le fait que les deux plaques (102 et 106) sont parallèles entre elles.

21. Machine selon la revendication 18, caractérisée par le fait que les deux tourillons (100 et 104) sont excentrés et s'étendent l'un vers l'avant et l'autre vers l'arrière (vu dans la direction d'avancement A).

22. Machine selon la revendication 18, caractérisée par le fait que chaque orifice de guidage (101) en forme de T comporte une branche (107) sensiblement perpendiculaire au tube (18) du troisième tronçon latéral (9, 10) correspondant et une branche (108) qui est sensiblement parallèle audit tube (18) et qui est plus éloigné de ce tube (18) que l'autre branche (107).

23. Machine selon l'une quelconque des revendications 18 à 22, caractérisée par le fait qu'en position de travail, les tourillons (100) se situent dans les branches (108) des orifices (101) et qu'en position de transport, ils se situent dans les extrémités opposées des branches (107).

24. Machine selon l'une quelconque des revendications 18 à 23, caractérisée par le fait que l'orifice (105) de chaque seconde plaque (106) est sensiblement parallèle à la branche (108) de l'orifice (101) et au tube (18) du troisième tronçon latéral (9, 10) correspondant et qu'il se situe sensiblement à mi-distance entre les deux extrémités de l'autre branche (107) de l'orifice (101).

25. Machine selon la revendication 24, caractérisée par le fait que par rapport à un plan de symétrie S de l'orifice (101) chaque orifice (105) s'étend d'un côté, en direction du rotor (13) extérieur, aussi loin que la branche (108) de l'orifice (101) et de l'autre côté, en direction du rotor (13) du second tronçon latéral (7, 8), sur une distance égale à la moitié de la longueur de la branche (107) de l'orifice (101).

26. Machine selon l'une quelconque des revendications précédentes, caractérisée par le fait qu'elle comporte des tirants (64) s'étendant entre les axes d'articulation (20) entre les premiers et les seconds tronçons latéraux (5, 6 et 7, 8) et une traverse (55) solidaire de la poutre (2).

27. Machine selon la revendication 26, caractérisée par le fait que les tirants (64) sont articulés sur la traverse (55) au moyen de pivots (65) qui s'étendent dans le prolongement des axes d'articulation (20) entre le tronçon central (4) et les premiers tronçons latéraux (5, 6).

28. Machine selon la revendication 27, caractérisée par le fait que les tirants (64) sont constitués par des organes flexibles.

29. Machine selon l'une quelconque des revendications précédentes, caractérisée par le fait que les boîtiers (15) des tronçons (4 à 8) comportent des butées (39, 40 et 41) pour limiter les angles de pivotement des tronçons latéraux (5 à 10) autour de leurs axes d'articulation (20) lors de la transposition en position de transport.

30. Machine selon l'une quelconque des revendications précédentes, caractérisée par le fait que les boîtiers (15) et les embouts (22) comportent des butées (42 et 43) qui sont dirigées vers le sol.

31. Machine selon l'une quelconque des revendications précédentes, caractérisée par le fait que chaque vérin hydraulique (29, 30) comporte un dispositif de verrouillage (44) manoeuvrable à distance, comportant une lame (48) pouvant bloquer le tourillon (33, 68, 79, 96, 100 ou 104) correspondant lorsque la machine est en position de transport.

32. Machine selon l'une quelconque des revendications précédentes, caractérisée par le fait qu'elle comporte deux dispositifs d'arrêt télescopiques (86) reliant les seconds tronçons latéraux (7, 8) au tronçon central (4).

33. Machine selon la revendication 32, caractérisée par le fait que chaque dispositif d'arrêt télescopique (86) porte un dispositif de blocage (89) manoeuvrable à distance, permettant de le bloquer dans la position de transport, de sorte qu'il immobilise les tronçons latéraux (5 à 10) correspondants dans cette position.

34. Machine selon l'une quelconque des revendications précédentes, caractérisée par le fait qu'elle comporte un dispositif de protection (49) réalisé en cinq parties (50 à 54) indépendantes les unes par rapport aux autres.

35. Machine selon la revendication 34, caractérisée par le fait que le dispositif de protection (49) comporte une partie centrale (50) qui est fixée sur le tronçon central (4) du châssis (1), deux parties intermédiaires (51 et 52) qui sont fixées sur les seconds tronçons latéraux (7 et 8) et deux parties extérieures (53 et 54) qui sont fixées sur les troisièmes tronçons latéraux (9 et 10).

## Claims

1. A haymaking machine having a frame (1) able to be coupled to a tractor, the frame (1) being composed of a central section (4) and of several lateral sections (5 to 10) which are articulated together by means of axes (20) directed in the direction of displacement and which carry rotors (13) driven in rotation during work by means of transmission elements which are housed in the sections (4 to 10) of the frame (1), the said lateral sections (5 to 10) being able to be tranposed by means of hydraulic jacks (29, 30) into a working position in which they are approximately aligned and into a transport position in which they are folded about their axes of articulation, ***characterised in that*** on each side of the central section (4) are arranged three lateral sections (5 to 10) which are articulated together by means of axes (20) directed in the direction of displacement and each of which is constituted by a tube (18) and a casing (15, 19) equipped with a rotor (13), in that the articulations between the sections (4 to 10) are such that they allow that in the transport position the first and second lateral sections (5, 6 and 7, 8) are directed upwardly and the third lateral sections (9, 10) are directed downwardly from their respective axes of articulation (20) and in that the hydraulic jack (29, 30) extends directly from the central section (4) to each third lateral section (9, 10), the end of each hydraulic jack (29, 30) which is connected to the third lateral section (9, 10) having a pin (33, 68, 79, 96, 100) which is housed in an oblong opening (34, 69, 80, 97, 101) provided in a plate (35, 73, 81, 98, 102) which is solidly attached to the said third section (9, 10).

2. A machine in accordance with claim 1, ***characterised in that*** each hydraulic jack (29, 30) is further from the ground than the various axes of articulation (20) between the sections (4 to 10).

3. A machine in accordance with claim 1 or 2, ***characterised in that*** each hydraulic jack (29, 30) is situated in front of the lateral sections (5 to 10).

4. A machine in accordance with any one of the preceding claims, ***characterised in that*** the connection between each hydraulic jack (29, 30) and the corresponding third lateral section (9, 10) has means (66) arranged in such a way as to displace the pin (68, 79, 96, 100) upwardly, in relation to the axis of articulation (20), in its oblong opening (69, 80, 97, 101) when the said hydraulic jack (29, 30) pulls or pushes on the third lateral section (9, 10) in the starting up phase in order to displace it into the transport position or into the working position.

5. A machine in accordance with claim 4, ***characterised in that*** the hydraulic jacks (29, 30) are equipped with pins (68) which are guided in Y shaped openings (69) with three branches (70, 71, 72) provided in plates (73) which are connected to the third lateral sections (9, 10).

6. A machine in accordance with claim 5, ***characterised in that*** one (70) of the branches of each opening (69) is approximately parallel to the tube (18) of the corresponding third lateral section (9, 10) and in that the two other branches (71 and 72) are divergent and are directed towards the middle of the machine of the machine in the working position.

7. A machine in accordance with claim 5 or 6, ***characterised in that*** the plates (73) comprise a moveable guide (75) able to close up the entrance of one or the other of the branches (71, 72) and automatically guiding the pin (68) of the corresponding jack (29, 30) towards the branch (71 or 72) which is directed upwardly.

8. A machine in accordance with claim 7, ***characterised in that*** the moveable guide (75) is articulated on a pivot (76) and can turn about this latter under the effect of its own weight.

9. A machine in accordance with claim 7 or 8, characterised in that the plates (73) have two stops (77, 78) to halt the moveable guides (75) in the appropriate positions.

10. A machine in accordance with claim 4, ***characterised in that*** the hydraulic jacks (29, 30) are equipped with pins (79) housed in the elongated openings (80) which are provided in the plates (81) solidly attached to the third lateral sections (9, 10) and in that these pins (79) cooperate with guide devices (83) which are solidly attached to the second lateral sections (7, 8).

11. A machine in accordance with claim 10, ***characterised in that*** in the working position the openings (80) are directed obliquely upwardly in the direction towards the middle of the machine.

12. A machine in accordance with claim 10, ***characterised in that*** each guide device (83) is constituted by two plates (84) which keep the pins (79) in a position situated above a horizontal plane passing through the axes of articulation (20), when the third lateral sections (9, 10) are folded.

13. A machine in accordance with claim 12, ***characterised in that*** the plates (81) which are solidly attached to the third lateral sections (9, 10) straddle the plates (84) of the guide devices (83) when the said sections are folded.

14. A machine in accordance with claim 4, ***characterised in that*** each hydraulic jack (29, 30) has a disc (93) which is housed between two guides (94 and 95) provided on the plates (98) which are connected to the corresponding third lateral section (9, 10), this disc (93) having an eccentric pin (96) which is housed in the openings (97) of the said plates (98).

15. A machine in accordance with claim 14, ***characterised in that*** the openings (97) have two branches (109, 110) arranged in the shape of a T, the upper branches (109) being approximately parallel to the tube (18) of the corresponding third lateral section (9, 10) and the other branches (110) being approximately perpendicular to the said tube.

16. A machine in accordance with claim 14, ***characterised in that*** in the working position the guides (94 and 95) are situated above and below the disc (93) and in that they cooperate with the discs (93) in order to hold the lateral sections (9, 10) during their displacements about the axes (20).

17. A machine in accordance with any one of claims 14 to 16, ***characterised in that*** in the working position the pins (96) are situated in the upper branches (109) of the openings (97) and in that in the transport position, they are situated in the opposite ends of the branches (110).

18. A machine in accordance with claim 4, ***characterised in that*** the rod (67) of each hydraulic jack (29, 30) has a pin (100) which is engaged in a T shaped opening (101) of a plate (102) solidly attached to the corresponding third lateral section (9, 10) and a foot (103) which is equipped with a pin (104) housed in an oblong opening (105) of a second plate (106) which is also solidly attached to the corresponding third lateral section (9, 10).

19. A machine in accordance with claim 18, ***characterised in that*** the foot (103) is approximately perpendicular to the rod (67) of the corresponding hydraulic jack (29, 30).

20. A machine in accordance with claim 18, ***characterised in that*** the two plates (102 and 106) are parallel with each other.

21. A machine in accordance with claim 18, ***characterised in that*** the two pins (100 and 104) are eccentric and extend one towards the front and the other towards the rear (when seen in the direction of advance A).

22. A machine in accordance with claim 18, ***characterised in that*** each T shaped guide opening (101) has a branch (107) approximately perpendicular to the tube (18) of the corresponding third lateral section (9, 10) and a branch (108) which is approximately parallel to the said tube (18) and which is further from this tube (18) than the other branch (107).

23. A machine in accordance with any one of claims 18 to 22, ***characterised in that*** in the working position the pins (100) are situated in the branches (108) of the openings (101) and in that in the transport position, they are situated in the opposite ends of the branches (107).

24. A machine in accordance with any one of claims 18 to 23, ***characterised in that*** the opening (105) of each second plate (106) is approximately parallel to the branch (108) of the opening (101) and to the tube (18) of the corresponding third lateral section (9, 10) and in that it is situated approximately half way between the two ends of the other branch (107) of the opening (101).

25. A machine in accordance with claim 24, characterised in that in relation to a plane of symmetry S of the opening (101), each opening (105) extends on one side, in the direction of the outer rotor (13), as far as the branch (108) of the opening (101) and on the other side, in the direction of the rotor (13) of the second lateral section (7, 8), at a distance equal to half of the length of the branch (107) of the opening (101).

26. A machine in accordance with any one of the preceding claims, ***characterised in that*** it has tie rods (64) extending between the axes of articulation (20) between the first and the second lateral sections (5, 6 and 7, 8) and a crosspiece (55) solidly attached to the beam (2).

27. A machine in accordance with claim 26, ***characterised in that*** the tie rods (64) are articulated on the crosspiece (55) by means of pivots (65) which extend in the extension of the axes of articulation (20) between the central section (4) and the first lateral sections (5, 6).

28. A machine in accordance with claim 27, ***characterised in that*** the tie rods (64) are constituted by flexible elements.

29. A machine in accordance with any one of the preceding claims, ***characterised in that*** the casings (15) of the sections (4 to 8) have stops (39, 40 and 41) to limit the angles of pivoting of the lateral sections (5 to 10) about their axes of articulation (20) when moved into the transport position.

30. A machine in accordance with any one of the preceding claims, ***characterised in that*** the casings (15) and the tips (22) have stops (42 and 43) which are directed towards the ground.

31. A machine in accordance with any one of the preceding claims, characterised in that each hydraulic jack (29, 30) has a remote controlled locking device (44) having a blade (48) able to block the corresponding pin (33, 68, 79, 96, 100 or 104) when the machine is in the transport position.

32. A machine in accordance with any one of the preceding claims, ***characterised in that*** it has two telescopic stopping devices (86) connecting the second lateral sections (7, 8) to the central section (4).

33. A machine in accordance with claim 32, characterised in that each telescopic stopping device (86) carries a remote controlled blocking device (89), allowing to block said stopping device in the transport position, in such a way that it immobilises the corresponding lateral sections (5 to 10) in this position.

34. A machine in accordance with any one of the preceding claims, ***characterised in that*** it has a protection device (49) made in five parts (50 to 54) which are independent with regard to one another.

35. A machine in accordance with claim 34, ***characterised in that*** the protection device (49) has a central part (50) which is fixed on the central section (4) of the frame (1), two intermediate parts (51 and 52) which are fixed on the second lateral sections (7 and 8) and two outer parts (53 and 54) which are fixed on the third lateral sections (9 and 10).

## Patentansprüche

1. Heuwerbungsmaschine mit einem Rahmen (1), der an ein Zufahrzeug angekuppelt werden kann, welcher Rahmen (1) ein Mittelstück (4) und mehrere Seitenstücke (5 bis 10) aufweist, die miteinander mittels in Fahrtrichtung ausgerichteter Achsen (20) gelenkig verbunden sind und die Rotoren (13) tragen, welche bei der Arbeit mittels Transmissionsorganen, die in den Stücken (4 bis 10) des Rahmens (1) untergebracht sind, in Drehung versetzt werden, wobei die Seitenstücke (5 bis 10) mittels Hydraulikzylindern (29, 30) in eine Arbeitsstellung, in der sie im wesentlichen fluchtend ausgerichtet sind, und in eine Transportstellung, in der sie um ihre Gelenkachsen geklappt sind, versetzt werden können, dadurch gekennzeichnet, daß auf jeder Seite des Mittelstücks (4) drei Seitenstücke (5 bis 10) angeordnet sind, die miteinander mittels in Fahrtrichtung weisende Achsen (20) gelenkig verbunden sind und von denen jeder aus einem Rohr (18) und einem Gehäuse (15, 19), das mit einem Rotor(13) versehen ist,besteht, daß die Gelenke zwischen den Stücken (4 bis 10) derart ausgebildet sind, daß sie gestatten, daß in der Transportstellung die ersten und zweiten Seitenstücke (5, 6 und 7, 8) nach oben gerichtet sind und die dritten Seitenstücke (9, 10) nach unten gerichtet sind ausgehend von ihren entsprechenden Gelenkachsen (20), und daß der Hydraulikzylinder (29, 30) sich direkt vom Mittelstück (4) bis zu jedem dritten Seitenstück (9, 10) erstreckt, wobei das Ende jedes Hydraulikzylinders (29, 30), das mit dem dritten Seitenstück (9, 10) verbunden ist, einen Zapfen (33, 68, 79, 96, 100) umfaßt, der in einer Langöffnung (34, 69, 80, 97, 101) angeordnet ist, die in einer Platte (35, 73, 81, 98, 102) vorgesehen ist, welche fest mit dem dritten Stück (9, 10) verbunden ist.

2. Maschine nach Anspruch 1, dadurch gekennzeichnet, daß jeder Hydraulikzylinder (29, 30) vom Boden weiter entfernt ist als die verschiedenen Gelenkachsen (20) zwischen den Stücken (4 bis 10).

3. Maschine nach Anspruch 1 oder 2, dadurch gekennzeichnet, daß jeder Hydraulikzylinder (29, 30) sich vor den Seitenstücken (5 bis 10) befindet.

4. Maschine nach irgendeinem der vorhergehenden Ansprüche, dadurch gekennzeichnet, daß die Verbindung zwischen jedem Hydraulikzylinder (29, 30) und dem entsprechenden dritten Seitenstück (9, 10) Mittel (66) umfaßt, die derart angeordnet sind, daß der Zapfen (68, 79, 96, 100) nach oben, in bezug auf die Gelenkachse (20), in seiner Langöffnung (69, 80, 97, 101) verstellt wird, wenn der Hydraulikzylinder (29, 30) anzieht oder auf das dritte Seitenstück (9, 10) in der Anfahrphase drückt, um es in die Transportstellung oder in die Arbeitsstellung zu verstellen.

5. Maschine nach Anspruch 4, dadurch gekennzeichnet, daß die Hydraulikzylinder (29, 30) mit Zapfen (68) versehen sind, die in Öffnungen (69) mit drei Armen (70, 71, 72) in Form eines Y geführt sind, welche in Platten (73) vorgesehen sind, die mit den dritten Seitenstücken (9, 10) verbunden sind.

6. Maschine nach Anspruch 5, dadurch gekennzeichnet, daß einer (70) der Arme jeder Öffnung (69) im wesentlichen parallel zum Rohr (18) des entsprechenden dritten Seitenstücks (9, 10) ist und daß die beiden anderen Arme (71, 72) divergierend sind und gegen die Mitte der Maschine in Arbeitsstellung gerichtet sind.

7. Maschine nach Anspruch 5 oder 6, dadurch gekennzeichnet, daß die Platten (73) eine bewegliche Führung (75) aufweisen, die den Eingang des einen oder des anderen Armes (71, 72) verschließen kann und den Zapfen (68) des entsprechenden Hydraulikzylinders (29, 30) automatisch gegen den Arm (71 oder 72) führt, der nach oben gerichtet ist.

8. Maschine nach Anspruch 7, dadurch gekennzeichnet, daß die bewegliche Führung (75) gelenkig auf einem Drehzapfen (76) gelagert ist und um diesen unter der Wirkung ihres Eigengewichtes drehen kann.

9. Maschine nach Anspruch 7 oder 8, dadurch gekennzeichnet, daß die Platten (73) zwei Anschlage (77, 78) zur Arretierung der beweglichen Führungen (75) in geeigneten Stellungen aufweisen.

10. Maschine nach Anspruch 4, dadurch gekennzeichnet, daß die Hydraulikzylinder (29, 30) mit Zapfen (79) versehen sind, die in Öffnungen (80) mit länglicher Form angeordnet sind, welche in mit den dritten Seitenstücken (9, 10) fest verbundenen Platten (81) vorgesehen sind, und daß diese Zapfen (79) mit Führungsvorrichtungen (83) zusammenarbeiten, die mit den zweiten Seitenstücken (7, 8) fest verbunden sind.

11. Maschine nach Anspruch 10, dadurch gekennzeichnet, daß die Öffnungen (80) in Arbeitsstellung schräg von unten nach oben in Richtung der Mitte der Maschine gerichtet sind.

12. Maschine nach Anspruch 10, dadurch gekennzeichnet, daß jede Führungsvorrichtung (83) durch zwei Platten (84) gebildet wird, welche die Zapfen (79) in einer Stellung hält, die oberhalb einer Horizontalebene liegt, die durch die Gelenkachsen (20) verläuft, wenn die dritten Seitenstücke (9, 10) zurückgeklappt sind.

13. Maschine nach Anspruch 12, dadurch gekennzeichnet, daß die Platten (81), die fest mit den dritten Seitenstücken (9, 10) verbunden sind, an den Platten (84) der Führungsvorrichtung (83) vorbeischwenken, wenn diese Stücke zurückgeklappt werden.

14. Maschine nach Anspruch 4, dadurch gekennzeichnet, daß jeder Hydraulikzylinder (29, 30) eine Scheibe (93) aufweist, die zwischen zwei Führungen (94 und 95) angeordnet ist, die auf Platten (98) vorgesehen sind, welche mit dem entsprechenden dritten Seitenstück (9, 10) verbunden sind, welche Scheibe (93) einen exzentrischen Zapfen (96) aufweist, der in Öffnungen (97) dieser Platten (98) angeordnet ist.

15. Maschine nach Anspruch 14, dadurch gekennzeichnet, daß die Öffnungen (97) zwei Arme (109 und 110) aufweisen, die in Form eines T angeordnet sind, wobei die oberen Arme (109) im wesentlichen parallel zum Rohr (18) des entsprechenden dritten Steitenteils (9, 10) sind und die anderen Arme (110) im wesentlichen senkrecht zu diesem Rohr sind.

16. Maschine nach Anspruch 14, dadurch gekennzeichnet, daß in Arbeitsstellung die Führungen (94 und 95) sich oberhalb und unterhalb der Scheiben (93) befinden und daß sie mit den Scheiben (93) zusammenarbeiten, um die Seitenstücke (9, 10) bei ihrer Versetzung um die Achsen (20) zu halten.

17. Maschine nach irgendeinem der Ansprüche 14 bis 16, dadurch gekennzeichnet, daß die Zapfen (96) sich in Arbeitsstellung in den oberen Armen (109) der Öffnungen (97) befinden und daß sie sich in Transportstellung in den gegenüberliegenden Enden der Arme (110) befinden.

18. Maschine nach Anspruch 4, dadurch gekennzeichnet, daß die Stange (67) jedes Hydraulikzylinders (29, 30) einen Zapfen (100), der in die T-förmige Öffnung (101) einer Platte (102), die fest mit dem entsprechenden dritten Seitenstück (9, 10) verbunden ist, eingreift, und eine Lasche (103) aufweist, die mit einem Zapfen (104) versehen ist, der in einer Langöffnung (105) einer zweiten Platte (106) angeordnet ist, die ebenfalls fest mit dem entsprechenden dritten Seitenstück (9, 10) verbunden ist.

19. Maschine nach Anspruch 18, dadurch gekennzeichnet, daß die Lasche (103) im wesentlichen senkrecht zur Stange (67) des entsprechenden Hydraulikzylinders (29, 30) ist.

20. Maschine nach Anspruch 18, dadurch gekennzeichnet, daß die zwei Platten (102 und 106) parallel zueinander sind.

21. Maschine nach Anspruch 18, dadurch gekennzeichnet, daß die zwei Zapfen (100 und 104) exzentrisch sind und sich der eine nach vorne und der andere nach hinten (gesehen in Fahrtrichtung A) erstreckt.

22. Maschine nach Anspruch 18, dadurch gekennzeichnet, daß jede T-förmige Führungsöffnung (101) einen Arm (107) im wesentlichen senkrecht zum Rohr (18) des entsprechenden dritten Steitenteils (9, 10) und einen Arm (108), der im wesentlichen parallel zum Rohr (18) ist und der von diesem Rohr (18) weiter entfernt ist als der andere Arm (107), aufweist.

23. Maschine nach irgendeinem der Ansprüche 18 bis 22, dadurch gekennzeichnet, daß die Zapfen (100) sich in Arbeitsstellung in den Armen (108) der Öffnungen (101) befinden und daß sie sich in Transportstellung in den gegenüberliegenden Enden der Arme (107) befinden.

24. Maschine nach irgendeinem der Ansprüche 18 bis 23, dadurch gekennzeichnet, daß die Öffnung (105) jeder zweiten Platte (106) im wesentlichen parallel zum Arm (108) der Öffnung (101) und zum Rohr (18) des entsprechenden dritten Seitenstücks (9, 10) ist und daß sie sich im wesentlichen im Abstandsmittel zwischen den zwei Enden des anderen Arms (107) der Öffnung (101) befindet.

25. Maschine nach Anspruch 24, dadurch gekennzeichnet, daß sich jede Öffnung (105), bezogen auf eine Symmetrieebene S der Öffnung (101), auf einer Seite, in Richtung des äußeren Rotors (13), ebenso weit erstreckt wie der Arm (108) der Öffnung (101) und auf der anderen Seite, in Richtung des Rotors (13) des zweiten Seitenstücks (7, 8), auf einer Länge erstreckt, die gleich der halben Länge des Arms (107) der Öffnung (101) ist.

26. Maschine nach irgendeinem der vorhergehenden Ansprüche, dadurch gekennzeichnet, daß sie Zugstangen (64) aufweist, die sich zwischen den Gelenkachsen (20) zwischen den ersten und den zweiten Seitenstücken (5, 6 und 7, 8) und einem fest mit dem Balken (2) verbundenen Querträger (55) erstrecken.

27. Maschine nach Anspruch 26, dadurch gekennzeichnet, daß die Zugstangen (64) gelenkig auf dem Querträger (55) mittels Drehzapfen (65) gelagert sind, die sich in der Verlängerung der Gelenkzapfen (20) zwischen dem Mittelstück (4) und den ersten Seitenstücken (5, 6) erstrecken.

28. Maschine nach Anspruch 27, dadurch gekennzeichnet, daß die Zugstangen (64) aus flexiblen Organen gebildet sind.

29. Maschine nach irgendeinem der vorhergehenden Ansprüche, dadurch gekennzeichnet, daß die Gehäuse (15) der Stücke (4 bis 8) Anschläge (39, 40 und 41) aufweisen, um die Winkel der Verschwenkung der Seitenstücke (5 bis 10) um ihre Gelenkachsen (20) bei der Versetzung in die Transportstellung zu begrenzen.

30. Maschine nach irgendeinem der vorhergehenden Ansprüche, dadurch gekennzeichnet, daß die Gehäuse (15) und die Übergangsrohrstücke (22) Anschläge (42 und 43), die gegen den Boden gerichtet sind, aufweisen.

31. Maschine nach irgendeinem der vorhergehenden Ansprüche, dadurch gekennzeichnet, daß jeder Hydraulikzylinder (29, 30) eine fernbedienbare Verriegelungseinrichtung (44) umfaßt, die eine dünne Platte (48) aufweist, welche den entsprechenden Zapfen (33, 68, 79, 96, 100 oder 104) blockiert, wenn die Maschine in Transportstellung ist.

32. Maschine nach irgendeinem der vorhergehenden Ansprüche, dadurch gekennzeichnet, daß sie zwei teleskopische Arretiervorrichtungen (86) aufweist, welche die zweiten Seitenstücke (7, 8) mit dem Mittelstück (4) verbinden.

33. Maschine nach Anspruch 32, dadurch gekennzeichnet, daß jede teleskopische Arretiervorrichtung (86) eine fernbedienbare Blockiervorrichtung (89) trägt, die gestattet, sie in der Transportstellung derart zu blockieren, daß sie die entsprechenden Seitenstücke (5 bis 10) in dieser Stellung festhält.

34. Maschine nach irgendeinem der vorhergehenden Ansprüche, dadurch gekennzeichnet, daß sie eine Schutzvorrichtung (49) aufweist, die aus fünf voneinander unabhängigen Teilen (50 bis 54) gebildet wird.

35. Maschine nach Anspruch 34, dadurch gekennzeichnet, daß die Schutzvorrichtung (49) einen zentralen Teil (50), der auf dem Mittelstück (4) des Rahmens (1) befestigt ist, zwei Zwischenteile (51 und 52), die auf den zweiten Seitenstücken (7 und 8) befestigt sind, und zwei Außenteile (53 und 54), die auf den dritten Seitenstücken (9 und 10) befestigt sind, umfaßt.
